# EUROPÄISCHE PATENTSCHRIFT

(11) **EP 3 694 727 B1**
(45) Veröffentlichungstag und Bekanntmachung des Hinweises auf die Patenterteilung: **08.12.2021**
(21) Anmeldenummer: 18796592.6
(22) Anmeldetag: 12.10.2018
(51) Int. Cl.: B60B 7/00

(54) **AERODYNAMISCHE FELGE**
AERODYNAMIC RIM
JANTE AÉRODYNAMIQUE

(30) Priorität: 14.10.2017 DE 102017009746
(43) Veröffentlichungstag der Anmeldung: 19.08.2020
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2018/077963
(87) Internationale Veröffentlichungsnummer: WO 2019/073068

(56) Entgegenhaltungen:
- EP-A1- 3 112 205
- DE-A1- 3 816 415
- DE-A1-102011 010 509
- US-A- 5 772 286

## Beschreibung

Die vorliegende Erfindung betrifft eine Felge für-ein Fahrzeugrad nach dem Oberbegriff des Anspruchs 1. Eine solche Felge ist aus der DE 10 2011 010509 A1 bekannt.

Die Konzeption moderner Felgen unterliegt unterschiedlichen, einander teilweise entgegenlaufenden Anforderungen. Zum einen soll die Felge eine Felgenkontur aufweisen, die eine einfache Herstellung ermöglicht, zum anderen ist eine zentrale Forderung, dass die Felge eine möglichst hohe Luftdurchströmung ermöglicht, um im Bedarfsfall eine Bremsscheibe einer Fahrzeugbremse optimal über den Luftstrom kühlen zu können. Ferner muss beim Nachheizen der Bremsscheibe im Stand dafür gesorgt werden, dass die Wärme auch ohne Luftströmung abtransportiert werden kann.

Hieraus resultiert bei herkömmlichen Felgen die Forderung nach einer möglichst "offenen" Felgenstruktur, dass also die Zwischenräume einen möglichst großen Teil der Felge ausmachen.

Aus aerodynamischen Gründen sollte die Felge jedoch möglichst geschlossen sein, um Luftverwirbelungen, die durch die Zwischenräume, die oft auch als Felgendurchbrüche bezeichnet werden, entstehen, möglichst zu verhindern.

Im normalen Fahrbetrieb herrscht im Bereich des Unterbodens des Fahrzeugs ein Überdruck, der dafür sorgt, dass Luft durch die Zwischenräume der Felge gedrückt wird. Dies führt zu hohen Luftverwirbelungen. Würde die Felge als geschlossene Scheibe ausgeführt, so könnte der Cw-Wert, der als Faktor in das Zu-Stande-Kommen des Luftwiderstands des Fahrzeugs eingeht, verbessert werden.

Um diesen einerseits aus thermischen, andererseits aus aerodynamischen Gründen einander quasi widersprechenden Anforderungen gerecht zu werden, ist es bekannt, durch Verwendung beweglicher Abdeckelemente die felgenseitigen Durchbrechungen bedarfsabhängig öffnen und schließen zu können.

Bekannt sind beispielsweise Abdeckelemente, die Fliehkraft getrieben öffnen und schließen. Diese Abdeckelemente öffnen also beispielsweise bei Überschreiten einer gewissen Grenzgeschwindigkeit durch die auf sie wirkende Fliehkraft.

Derartige Systeme arbeiten jedoch nicht zuverlässig und können auch nur ab einer gewissen Geschwindigkeit die Abdeckelemente öffnen oder schließen. Anders ausgedrückt, eine Öffnung erfolgt nicht bedarfs- sondern geschwindigkeitsabhängig.

Aufgabe der vorliegenden Erfindung ist es daher eine Felge für ein Fahrzeugrad bereitzustellen die zuverlässig arbeitet und sowohl den Anforderungen an die Aerodynamik als auch an die Kühlung der Bremsen gerecht wird.

Diese Aufgabe wird erfindungsgemäß zum einen durch eine Felge für ein Fahrzeugrad nach Anspruch 1 gelöst. Die erfindungsgemäße Felge kennzeichnet sich also dadurch, dass das Abdeckelement sich beim Übergang zwischen der ersten Stellung und der zweiten Stellung, vorzugsweise elastisch reversibel, verformt.

In einer Variante der Erfindung geht das Abdeckelement von der ersten Stellung in die zweite Stellung durch Verformung über.

Vorteilhaft ist, wenn das Abdeckelement einen Befestigungsabschnitt umfasst, der unverschieblich mit dem Felgenkörper der Felge verbunden ist. Hierdurch ist das Abdeckelement sicher an dem Felgenkörper fixiert. Der Befestigungsabschnitt ist vorzugsweise radial außen liegend und/oder in Umfangsrichtung außen liegend am Abdeckelement angeordnet. Das Abdeckelement weist vorzugsweise eine überwiegend in radialer Richtung und Umfangsrichtung verlaufende flächige Erstreckung auf. Hierdurch kann der Zwischenraum stets zuverlässig und sicher geöffnet und verschlossen werden.

Vorteilhaft ist, wenn das Abdeckelement einen Betätigungsabschnitt umfasst, der beweglich gegenüber dem Felgenkörper der Felge ist. Vorzugsweise ist der Betätigungsabschnitt radial innen liegend und/oder in Umfangsrichtung außen liegend am Abdeckelement angeordnet. Vorzugsweise ist der Betätigungsabschnitt verschieblich gegenüber dem Felgenkörper der Felge. Der Betätigungsabschnitt kann jedoch auch verschwenkbar gegenüber dem Felgenkörper sein. Vorzugsweise ist der Betätigungsabschnitt in einer axialen Richtung und/oder in einer radialen Richtung und/oder in einer Umfangsrichtung verschieblich, gegenüber dem Felgenkörper der Felge.

Vorzugsweise ist der Betätigungsabschnitt in dem Felgenkörper auf einer vorgegebenen Bewegungsbahn zwangsgeführt.

Insbesondere durch Kombination des Betätigungsabschnitts mit dem vorgenannten Befestigungsabschnitt lässt sich ein einfacher Übergang des Abdeckelements von der ersten Stellung in die zweite Stellung, bei dem sich das Abdeckelement verformt, erreichen. Hierzu kann beispielsweise der Betätigungsabschnitt über die Betätigungseinrichtung bewegt werden.

Vorteilhaft ist, wenn sich das Abdeckelement in der ersten Stellung oder der zweiten Stellung in einem geschlossenen Zustand befindet, in dem der Zwischenraum durch das Abdeckelement geschlossen ist. Durch den geschlossenen Zustand des Abdeckelements wird die Aerodynamik der Felge erhöht. Vorzugsweise kann das Abdeckelement weitere Zwischenstellungen einnehmen.

Vorteilhaft ist, wenn sich das Abdeckelement in der ersten Stellung oder der zweiten Stellung in einem maximal geöffnet Zustand befindet, in dem der Zwischenraum durch das Abdeckelement jedenfalls teilweise freigegeben ist. Hierdurch wird ermöglicht, dass Luft durch den Zwischenraum strömen kann. Hierdurch kann, bei Verwendung der Felge an einem Fahrzeug, heiße Abluft aus dem Bereich der Bremsen entweichen bzw. kühle Luft von außen zur Bremse hin strömen kann.

Vorteilhaft ist, wenn das Abdeckelement im maximal geöffneten Zustand wenigstens bereichsweise nach axial außen oder nach axial innen gewölbt ist. Eine Wölbung nach axial außen, bietet den Vorteil, dass durch das Abdeckelement Luft in den Zwischenraum geleitet werden kann.

Vorteilhaft ist, wenn das Abdeckelement einen abgewinkelten Zustand einnehmen kann. Vorteilhafterweise verformt sich das Abdeckelement gegenüber der ersten oder der zweiten Stellung, wenn es in den abgewinkelten Zustand übergeht. Vorzugsweise ist das Abdeckelement mittels der Betätigungseinrichtung in einen abgewinkelten Zustand überführbar. Beispielsweise kann hierdurch der Betätigungsabschnitt über die Betätigungseinrichtung derart bewegbar sein, dass das Abdeckelement die abgewinkelte Stellung einnimmt. Mit einer abgewinkelten Stellung ist dabei eine Stellung gemeint, in der eine umfangsrichtungsseitige Kante des Abdeckelements weiter vom Felgenkörper abgehoben ist als die gegenüberliegende umfangsrichtungsseitige Kante des Abdeckelements.

Vorteilhaft ist, wenn das Abdeckelement sich beim Übergang in den abgewinkelten Zustand, vorzugsweise elastisch reversibel, verformt.

Vorteilhaft ist, wenn das Abdeckelement in dem abgewinkelten Zustand derart gegenüber dem Felgenkörper angeordnet ist, dass bei einer Drehung der Felge um die axiale Richtung Luft durch das Abdeckelement in den Zwischenraum geleitet wird. Hierdurch kann quasi ein Ventilationseffekt für den Felgeninnenraum bzw. die Bremse des Fahrzeugs, bei dem die Felge verwendet wird, geschaffen werden. Alternativ kann das Abdeckelement in dem abgewinkelten Zustand auch derart angeordnet sein, dass es Luft aus dem Zwischenraum quasi heraus leitet. Dieses Beispiel sollte dadurch möglich, dass das Abdeckelement mit seiner in Umfangsrichtung in Drehrichtung vorderen Seite abschließend an dem den Zwischenraum begrenzenden Tragabschnitt anliegt, und mit der gegenüberliegenden Seite in Umfangsrichtung von dem weiteren Tragabschnitt, der den Zwischenraum begrenzt abgehoben ist. Hierdurch kann bei Drehung der Felge in Drehrichtung hinter der geöffneten Seite des Abdeckelements quasi ein Unterdruck entstehen und Luft aus dem Zwischenraum gelangen. Hierdurch kann heiße Luft von der Bremsanlage abgeführt werden.

Es ist vorteilhaft, wenn das Abdeckelement, wenn es sich in dem abgewinkelten Zustand befindet, mit einer umfangsrichtungsseitigen Kante von dem Felgenkörper abgehoben ist, und mit einer dieser gegenüberliegenden umfangsrichtungsseitigen Kante an dem Felgenkörper anliegt.

Vorteilhaft ist, wenn der Felgenkörper wenigstens zwei Zwischenräume aufweist, wobei beiden, je ein Abdeckelement zugeordnet ist. Vorzugsweise weist die Felge mehrere Zwischenräume auf, denen jeweils ein Abdeckelement zugeordnet ist. Vorzugsweise ist jedem der Zwischenräume ein Abdeckelement zugeordnet. Vorteilhaft ist, wenn die Abdeckelemente der eben genannten Ausführungsformen je die Merkmale des Abdeckelements eines oder mehrerer der vorangehend und oder nachfolgend beschriebenen Ausführungsformen aufweisen. Hierdurch kann bei Bedarf eine ausreichende Strömung der Zwischenräume gewährleistet werden und auf der anderen Seite, falls keine Durchströmung der Zwischenräume gewünscht ist, eine sehr aerodynamische Felge bereitgestellt werden.

Vorteilhaft ist, wenn die fahrzeugabgewandte Oberfläche der Felge beim Blick in axialer Richtung öffnungsfrei, vorzugsweise und vorsprungsfrei, ist, wenn das Abdeckelement bzw. die Abdeckelemente sich in dem geschlossenen Zustand befinden. Hierdurch wird die Felge besonders aerodynamisch, wenn die Abdeckelemente sich im geschlossenen Zustand befinden. Es kommt hierdurch bei Drehung der Felge zu besonders geringen Verwirbelungen, was den Luftwiderstand eines Fahrzeugs, das mit der Felge ausgestattet ist verringert.

Vorteilhafterweise ist das bzw. sind die Abdeckelemente derart ausgebildet, dass, wenn das Abdeckelement bzw. die Abdeckelemente sich in dem geschlossenen Zustand befinden, das Abdeckelement bzw. die Abdeckelemente bündig mit den Tragabschnitten verlaufen, die den jeweiligen Zwischenraum begrenzen, dem das jeweilige Abdeckelement zugeordnet ist.

Vorteilhaft ist, wenn die Betätigungseinrichtung derart ausgebildet ist, dass das Abdeckelement durch pneumatische, elektrische oder magnetische Betätigung von der ersten Position in die zweite Position überführbar ist. Hierdurch kann das Abdeckelement sicher und zuverlässig von der ersten in die zweite Stellung überführt werden.

Vorteilhaft ist, wenn die Felge ein dem Zwischenraum zugeordnetes Innenabdeckelement aufweist. Das Innenabdeckelement ist dabei ausgebildet und angeordnet, um im Zwischenraum im Bereich der fahrzeugseitigen Seite der Felge angeordnet zu sein. Mit anderen Worten, das Innenabdeckelement ist an der fahrzeugzugewandten Seite des Felgenkörpers angeordnet. Dabei ist es vorteilhaft, wenn das Innenabdeckelement durch Betätigung über die Betätigungseinrichtung wenigstens von einer ersten in eine zweite Stellung überführbar ist, wobei sich eine Abdeckung des Zwischenraums durch das Abdeckelement in der ersten Stellung von einer Abdeckung des Zwischenraums durch das Abdeckelement in der zweiten Stellung unterscheidet. Vorzugsweise verformt sich das Innenabdeckelement beim Übergang zwischen der ersten Stellung und der zweiten Stellung. Vorzugsweise ist diese Verformung elastisch reversibel.

Vorteilhaft ist, wenn das Innenabdeckelement und das Abdeckelement sich beim Übergang in den maximal geöffneten Zustand in die gleiche Richtung, vorzugsweise nach axial außen, wölben. Hierdurch kann die Wölbung des Innenabdeckelements und des Abdeckelements besonders platzsparend erfolgen.

Das Abdeckelement und das Innenabdeckelement können miteinander gekoppelt, insbesondere mechanisch, insbesondere über ein in axialer Richtung verlaufendes Verbindungselement, verbunden, sein.

Alternativ kann es auch von Vorteil sein, wenn das Innenabdeckelement und das Abdeckelement sich beim Übergang in den maximal geöffneten Zustand in unterschiedliche Richtungen wölben, vorzugsweise wölbt sich das Abdeckelement nach axial außen und das Innenabdeckelement nach axial innen. Hierdurch kann eine maximale Durchströmung des Zwischenraums ermöglicht werden.

Vorteilhaft ist, wenn das Innenabdeckelement bündig mit den Tragabschnitten verläuft, die den jeweiligen Zwischenraum begrenzen, dem das Innenabdeckelement zugeordnet ist, wenn das Innenabdeckelement sich in dem geschlossenen Zustand befinden. Hierdurch werden Verwirbelungen besonders effizient unterdrückt.

Vorteilhaft ist, wenn das Abdeckelement und/oder das Innenabdeckelement derart ausgebildet ist, dass es sich beim Anlegen einer Spannung verformt, insbesondere wölbt. Vorzugsweise sind dabei das Abdeckelement und/oder das Innenabdeckelement aus einem Material gebildet oder umfasst ein solches Material, das sich beim Anlegen einer Spannung verformt, vorzugsweise wölbt. Hierdurch kann beispielsweise durch einfaches Anbringen von elektrischen Kontakten eine Betätigungseinrichtung geschaffen werden. Durch einfaches beaufschlagen mit Spannung kann das Abdeckelement bzw. das Innenabdeckelement verschiedene Stellungen einnehmen.

Vorteilhaft ist, wenn das Abdeckelement derart ausgebildet ist, dass es, wenn es nicht durch die Betätigungseinrichtung in eine von der ersten Stellung abweichende Stellung überführt und gehalten ist, in die erste Stellung zurückkehrt. Das Abdeckelement kann hierzu in eine bestimmte Stellung, beispielsweise in die erste Stellung, vorgespannt sein, insbesondere durch seine eigene Elastizität vorgespannt sein.

Vorzugsweise umfasst das Abdeckelement ein Formgedächtnismaterial oder besteht aus einem solchen. Beispielsweise kann das Formgedächtnismaterial sich aufgrund von Erwärmung verformen und bei Abkühlung wieder in seinen Ursprungszustand zurückkehren. Damit kann bei Überhitzung der Bremsanlage ein automatisches Öffnen des Abdeckelements sichergestellt werden.

Vorteilhaft ist allgemein, wenn das Abdeckelement sich abhängig von seiner Temperatur verformt, und insbesondere bei Erwärmung von der ersten Stellung in die zweite Stellung übergeht.

Vorteilhaft ist, wenn ein Elektromagnet, der ein elektromagnetisches Feld um das Abdeckelement verändern kann, vorzugsweise an einem Tragabschnitt, an dem Felgenkörper angeordnet ist, wobei das Abdeckelement derart ausgebildet ist, dass es durch die Änderung des Magnetfelds des Elektromagneten verformbar ist, und insbesondere bei Änderung des Magnetfelds des Elektromagneten von der ersten Stellung in die zweite Stellung übergeht.

Vorteilhaft ist, wenn das Abdeckelement eine sich über seine Fläche, die sich in Umfangsrichtung und radialer Richtung erstreckt, verändernde Materialstärke in axialer Richtung aufweist. Hierdurch können bestimmte Verformungen bei einfacher mechanischer Belastung des Abdeckelements erreicht werden. Beispielsweise kann sich das Abdeckelement komplex verformen, wenn der Betätigungsabschnitt translatorisch bewegt wird.

Vorteilhaft ist, wenn das Abdeckelement derart ausgebildet und angeordnet ist, dass es eine Luftangriffsfläche aufweist, die derart ausgebildet und angeordnet ist, dass der Luftwiderstand bei sich um die axiale Richtung drehender Felge das Abdeckelement von der ersten Stellung in die zweite Stellung oder von der zweiten Stellung in die erste Stellung drängt.

Vorteilhaft ist, wenn die Felge mehrere Abdeckelemente umfasst, die in ihrem Übergang von ihrer jeweiligen ersten in ihre jeweilige zweite Stellung miteinander gekoppelt sind. Bewegt sich als eines der gekoppelten Abdeckelemente von der ersten in die zweite Stellung, so bewegen sich auch die mit diesem gekoppelten Abdeckelemente in die zweite Stellung. Im Sinne der Erfindung ist auch, wenn wenigstens zwei Abdeckelemente derart miteinander gekoppelt sind.

Vorteilhaft ist, wenn sie mindestens ein Abdeckelement umfasst, das einen Druckaufnahmebereich umfasst, der mit einem Druckmedium beaufschlagbar ist, wobei das Abdeckelement sich in der ersten Stellung befindet, wenn der Druckaufnahmebereich nicht mit dem Druckmedium beaufschlagt ist, und sich in die zweite Stellung verformt, wenn der Druckaufnahmebereich mit dem Druckmedium beaufschlagt ist. Vorzugsweise ist der Druckaufnahmebereich derart ausgebildet und angeordnet, dass er bei Beaufschlagung mit Druckmedium zu einer Verformung des Abdeckelements führt. Als Druckmittelquelle kann dabei eine Reifenkavität des die Felge umfassenden Fahrzeugrads dienen.

Hierbei kann ein Druckmittelkanal von der Reifenkavität zur Betätigungseinrichtung vorgesehen sein. Der Druckmittelkanal kann wenigstens teilweise durch das Material des Felgenkörpers verlaufen. Der Druckmittelkanal kann wenigstens abschnittsweise, vorzugsweise vollständig im Material der Felge, vorzugsweise im Material eines der Tragabschnitte, verlaufen. Als Druckmittelquelle kann auch eine Verdichteranordnung zur Bereitstellung von unter Druck stehendem Druckmittel dienen. Vorteilhafterweise ist die Verdichteranordnung im Bereich der Felge angeordnet. Vorteilhaft ist, wenn die Verdichteranordnung wenigstens einen nabenseitigen Kompressionsraum umfasst. Damit kann das unter Druck stehende Druckmittel direkt am sich drehenden Felgenkörper bereitgestellt werden, wodurch beispielsweise Drehdurchführungen überflüssig werden.

Vorteilhaft ist, wenn in dem Zwischenraum ein Filterelement angeordnet ist, dass ausgebildet ist, um Bremsstaubpartikel aus der Luft zu filtern, die durch den Zwischenraum strömt.

Vorteilhaft ist, wenn die Betätigungseinrichtung ein Getriebe mit einem felgenkörperseitigen Getriebeelement und mit einem abdeckelementseitigen Getriebeelement umfasst, wobei das abdeckelementseitige Getriebeelement mit dem Betätigungsabschnitt des Abdeckelements gekoppelt ist, und wobei das Getriebe derart ausgebildet ist, dass es eine Bewegung des felgenkörperseitigen Getriebeelements in eine Bewegung des abdeckelementseitigen Getriebeelements umwandelt.

Vorteilhaft ist, wenn die Felge wenigstens zwei Abdeckelemente umfasst, die je mit ihrem Betätigungsabschnitt mit einem jeweiligen abdeckelementseitigen Getriebeelement verbunden sind, wobei das Getriebe derart ausgebildet ist, dass es eine Bewegung des felgenkörperseitigen Getriebeelements in eine Bewegung der abdeckelementseitigen Getriebeelemente umwandelt.

Die eben genannten Getriebe bzw. Getriebeelemente können auf unterschiedliche Arten ausgebildet sein. Beispielsweise kann das felgenkörperseitige Getriebeelement als Kurvenscheibe oder als Kurvenbahn ausgeführt sein. Das abdeckelementseitige Getriebeelement kann als Stößelabtrieb ausgebildet sein. Die Kopplung zwischen dem felgenkörperseitigen Getriebeelement und dem abdeckelementseitigen Getriebeelement kann eine kraftschlüssige Zwangslaufsicherung (bspw. über eine Vorspannung, insbesondere Federvorspannung, des abdeckelementseitigen Getriebeelements) oder eine formschlüssige Zwangslaufsicherung (bspw. über einen Eingriff des abdeckelementseitigen Getriebeelements in eine Kurvenbahn bzw. Nutführung des felgenkörperseitigen Getriebeelements) umfassen.

Das felgenkörperseitige Getriebeelement kann translatorisch, bspw. in axialer Richtung, oder rotatorisch, bspw. um die axiale Richtung, ausgebildet sein.

Das felgenkörperseitige Getriebeelement kann bspw. pneumatisch oder elektrisch oder rein mechanisch, insbesondere rotatorisch und/oder translatorisch, bewegbar sein.

Das abdeckelementseitige Getriebeelement kann translatorisch und/oder rotatorisch bewegbar sein. Vorteilhafterweise ist das abdeckelementseitige Getriebeelement derart gelagert, dass es, ausschließlich translatorisch bewegbar ist.

Vorteilhaft ist, wenn die Betätigungseinrichtung ein Expansionselement umfasst, das mit dem Betätigungsabschnitt des Abdeckelements derart gekoppelt ist, dass eine Volumenänderung des Expansionselements eine Bewegung des Betätigungsabschnitts des Abdeckelements bewirkt. Vorteilhafterweise wird durch die Bewegung des Betätigungsabschnitts eine Verformung des Abdeckelements bewirkt. Insbesondere ist es vorteilhaft, wenn die eben beschriebene Bewegung des Betätigungsabschnitts einen Übergang des Abdeckelements von der ersten in die zweite Stellung bewirkt. Beispielsweise kann das Abdeckelement durch Bewegung des Betätigungsabschnitts, die durch Volumenänderung des Expansionselements hervorgerufen wird, von einer geschlossenen in eine maximal geöffnete Stellung überführbar sein. Das Expansionselement kann ein Beispiel einer Betätigungseinrichtung darstellen. Ein Expansionselement kann ein einstückig ausgebildeter Volumenveränderbarer Körper sein. Insbesondere kann ein Expansionselement ohne translatorisch zueinander verschiebliche starre Elemente ausgebildet sein. Ein Expansionselement kann insbesondere elastische Wände aufweisen. Insbesondere kann das Expansionselement derart angeordnet und ausgebildet sein, dass elastische Wände eines Expansionselements bei einer Volumenänderung des Expansionselements eine Bewegung eines, vorzugsweise als Stößelabtrieb ausgebildeten, abdeckelementseitigen Getriebeelements bewirken.

Vorteilhaft ist, wenn die Betätigungseinrichtung pneumatisch mittels Druckmittel betätigbar ist. Als Druckmittelquelle kann dabei eine Reifenkavität des die Felge umfassenden Fahrzeugrads dienen. Hierbei kann ein Druckmittelkanal von der Reifenkavität zur Betätigungseinrichtung vorgesehen sein. Der Druckmittelkanal kann wenigstens teilweise durch das Material des Felgenkörpers verlaufen. Der Druckmittelkanal kann wenigstens abschnittsweise, vorzugsweise vollständig im Material der Felge, vorzugsweise im Material eines der Tragabschnitte, verlaufen. Als Druckmittelquelle kann auch eine Verdichteranordnung zur Bereitstellung von unter Druck stehendem Druckmittel dienen. Vorteilhafterweise ist die Verdichteranordnung im Bereich der Felge angeordnet. Vorteilhaft ist, wenn die Verdichteranordnung wenigstens einen nabenseitigen Kompressionsraum umfasst. Damit kann das unter Druck stehende Druckmittel direkt am sich drehenden Felgenkörper bereitgestellt werden, wodurch beispielsweise Drehdurchführungen überflüssig werden.

Bevorzugt ist, wenn das Abdeckelement in seinem geschlossenen Zustand mit allen seinen Kanten den Felgenkörper kontaktiert. Bevorzugt ist weiter, wenn sich im geöffneten Zustand ein in radialer Richtung mittlerer Bereich der Abdeckelemente von dem Felgenkörper abhebt. Vorteilhafterweise liegen ein radial innerer und einen radial äußerer Bereich am Felgenkörper an.

Bei den obenstehend genannten Verdichteranordnungen ist es vorteilhaft, wenn diese ein Verdichterbauteil umfassen und durch eine, vorzugsweise translatorische, Bewegung des Verdichterbauteils das Druckmittel unter Druck setzbar ist.

Im Sinne der Erfindung ist auch ein Fahrzeugrad nach dem vorangegangenen Anspruch, dadurch gekennzeichnet, dass es um eine Rotationsachse drehbar an einem Radträger lagerbar ist, und die Verdichteranordnung ein Getriebe, vorzugsweise ein Kurvengetriebe, umfasst, das eingerichtet ist, um durch ein Zusammenwirken eines radträgerseitigen Getriebeteils mit einem nabenseitigen Getriebeteil eine Rotationsbewegung zwischen Radträgerseite und Radnabenseite in eine, vorzugsweise oszillierende translatorische, Bewegung des Verdichterbauteils umzuwandeln.

Bei elektrischer Aktuierung der Betätigungseinrichtung kann ein Energieerzeuger bzw. Generator oder ein Energiespeicher bzw. Akkumulator auf verschiedene Arten angebracht werden.

Ein Energieerzeuger oder ein Energiespeicher kann beispielsweise im Bereich des Nabendeckels angeordnet sein. Ein Stator eines derartigen Generators bzw.

Energieerzeugers kann durch ein exzentrisch angebrachtes Gewicht realisiert werden.

Ein Energieerzeuger bzw. ein Generator kann auf einem Sitz im Innenbereich der Felge angebracht werden, beispielsweise im Anflanschbereich zum Bremsscheibentopf. Ein derartiger Generator kann mit einer außenliegenden Nase ausgeführt sein, die über einen am Bremssattel befestigten Gegenhalter fixiert (an der Drehung gehindert) wird.

Ein im Radlager integrierter Generator ist möglich. Bei einem derartigen Generator muß dann eine Verbindung, beispielsweise ein Schleifkontakt, zur Felge hergestellt werden.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figur 1: eine erfindungsgemäße Felge in einer schematischen Darstellung;
- Figur 2(a und b): ein Abdeckelement einer erfindungsgemäßen Felge in zwei schematischen Darstellungen;
- Figur 3: ein Abdeckelement und ein Innenabdeckelement einer erfindungsgemäßen Felge in einer schematischen Darstellung;
- Figur 4: eine erfindungsgemäße Felge in einer schematischen Darstellung;
- Figur 5: ein Abdeckelement einer erfindungsgemäßen Felge in verschiedenen Darstellungen;
- Figur 6: eine erfindungsgemäße Felge in verschiedenen Darstellungen;
- Figur 7: eine erfindungsgemäße Felge in verschiedenen schematischen Darstellungen;
- Figur 8: eine erfindungsgemäße Felge in verschiedenen Darstellungen;

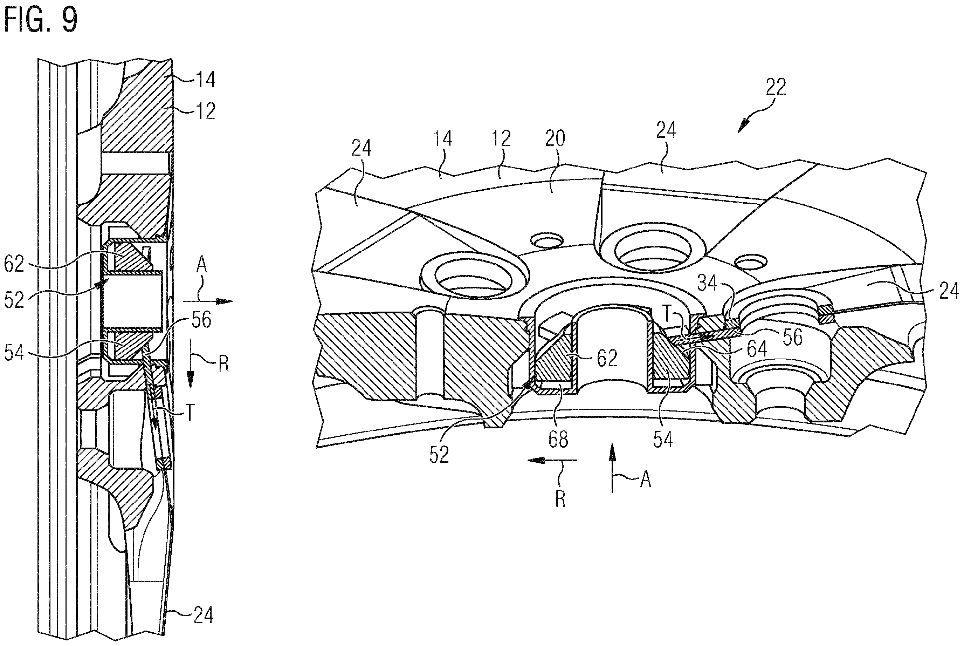

- Figur 9: eine erfindungsgemäße Felge in verschiedenen Darstellungen;
- Figur 10: eine erfindungsgemäße Felge in verschiedenen Darstellungen;
- Figur 11: eine erfindungsgemäße Felge in einer perspektivischen Darstellung;
- Figur 12: ein erfindungsgemäßes schematisches Fahrzeug;
- Figur 13: eine erfindungsgemäße Felge in einer Schnittdarstellung;
- Figur 14: eine erfindungsgemäße Felge in einer Schnittdarstellung; und
- Figur 15: eine Verdichteranordnung.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

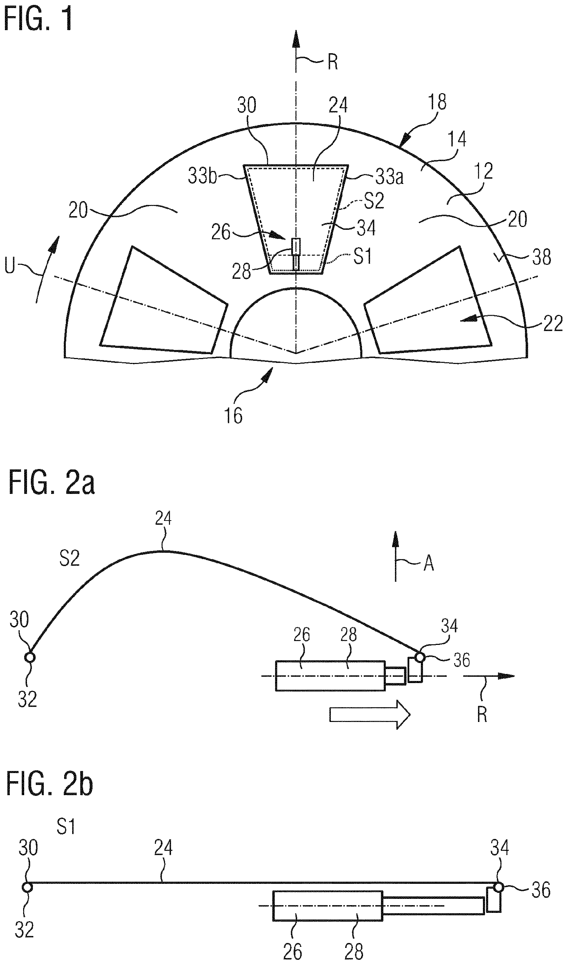

Figur 1 zeigt eine teilweise Darstellung einer Felge 12 für ein Fahrzeugrad 2. Eine radiale Richtung R ist durch einen entsprechenden Pfeil dargestellt und eine Umfangsrichtung U durch ein entsprechenden gekrümmten Pfeil. Eine axiale Richtung A ist ebenfalls durch einen entsprechenden Pfeil dargestellt.

Die Felge 12 umfasst einen Felgenkörper 14, der einen Nabenabschnitt 16 und ein Felgenbett 18 zur Aufnahme eines in Figur 1 nicht dargestellten Reifens 3 umfasst. Der Felgenkörper 14 umfasst mehrere zwischen dem Nabenabschnitt 16 und dem Felgenbett 18 angeordnete Tragabschnitte 20. Zwischen den Tragabschnitten 20 sind Zwischenräume 22 angeordnet.

Die Felge weist je Zwischenraum 22 ein dem Zwischenraum 22 zugeordnetes Abdeckelement 24 auf. In Figur 1 ist nur eines dieser Abdeckelemente 24 dargestellt.

Die Abdeckelemente 24 sind, vorzugsweise und wie in Figur 1 illustriert durch Betätigung über eine Betätigungseinrichtung 26, wenigstens von einer ersten Stellung S1 (Figur 2b) in eine zweite Stellung S2 (Figur 2a) überführbar.

Eine Abdeckung bzw. ein Grad der Verdeckung des Zwischenraums 22 durch das Abdeckelement 24 in der ersten Stellung S1 unterscheidet sich von einer Abdeckung des Zwischenraums 22 durch das Abdeckelement 24 in der zweiten Stellung S2.

Das Abdeckelement 24 verformt sich beim Übergang zwischen der ersten Stellung S1 und der zweiten Stellung S2. Die Verformung ist vorliegend elastisch reversibel.

In seinem entspannten Zustand nimmt das Abdeckelement 24 aus den Figuren 1 und 2 die im vorliegenden Beispiel gewölbte Stellung S2 ein. Über die Betätigungseinrichtung 26 kann das Abdeckelement 44 aus der Stellung S2 gestreckt und in die Stellung S1 gebracht werden.

In der Ausführungsform von Figur 1 ist die Betätigungseinrichtung 26 mit mehreren Druckzylindern 28 ausgebildet. Die Druckzylinder 28 können einzeln oder gemeinsam ansteuerbar sein. Vorzugsweise sind die Druckzylinder 28 und damit die Betätigungseinrichtung 26 durch Beaufschlagung mit einem Druckmittel betätigbar.

Das Druckmittel zur Beaufschlagung der Betätigungseinrichtung 26 kann beispielsweise aus der Reifenkavität stammen oder durch eine Verdichteranordnung 10 bereitgestellt werden.

Die Verdichteranordnung 10 wird weiter unten noch im Detail erläutert.

Das Abdeckelement 24 der Figuren 1 und 2 weist einen radial außen liegenden Befestigungsabschnitt 30 auf, der unverschieblich mit dem Felgenkörper 14 der Felge 12 verbunden ist. Der Befestigungsabschnitt 30 ist über ein Gelenk 32 schwenkbar mit dem Felgenkörper 14 verbunden.

Das Abdeckelement 24 weist, wie in Figur 1 bezeichnet, eine erste umfangsrichtungsseitige Kante 33a und eine dieser gegenüberliegende zweite umfangsrichtungsseitige Kante 33b auf.

Das Abdeckelement 24 der Figuren 1 und 2 weist einen radial innen liegenden Betätigungsabschnitt 34 auf, der in der radialen Richtung R verschieblich gegenüber dem Felgenkörper 14 der Felge 12 ist. Der Betätigungsabschnitt 34 ist über ein Schwenkgelenk 36 schwenkbar an dem Druckzylinder 28 angebracht.

Das Abdeckelement 24 der Figuren 1 und 2 befindet sich in der in Figur 2a gezeigten zweiten Stellung S2 in einem maximal geöffneten Zustand. In dem maximal geöffneten Zustand ist der Zwischenraum 22 durch das Abdeckelement 24 jedenfalls teilweise freigegeben (obere Darstellung Figur 2) .

Das Abdeckelement 24 der Figuren 1 und 2 befindet sich in der in Figur 2b gezeigten ersten Stellung Sl in einem geschlossenen Zustand, in dem der Zwischenraum 22 durch das Abdeckelement 24 geschlossen ist (untere Darstellung Figur 2) .

Das Abdeckelement 24 ist im maximal geöffneten Zustand nach axial außen gewölbt. Es verläuft vorliegend bogenförmig.

Wie bereits oben erwähnt, so weist der Felgenkörper 14 mehrere Zwischenräume 22 (vorliegend fünf, die in Umfangsrichtung gleichverteilt angeordnet sind) auf. Allen Zwischenräumen 22 ist dabei je ein Abdeckelement 24 zugeordnet. Vorzugsweise umfasst die Felge 12 mehrere gleichartige Zwischenräume 22, denen jeweils gleichartige Abdeckelemente 24 zugeordnet sind.

Vorzugsweise sind alle Zwischenräume 22 der Felge 12 gleichartig ausgebildet und ihnen sind jeweils gleichartige Abdeckelemente 24 zugeordnet. Es ist auch möglich, dass die Felge 12 mehrere Arten von Zwischenräumen 22 aufweist. Dabei kann eine Art von Zwischenräumen 22 mit, vorzugsweise gleichartigen, Abdeckelementen 24 versehen sein und eine andere Art von Zwischenräume 22 ohne Abdeckelemente 24 ausgebildet sein.

Die Felge 12 ist vorzugsweise, wie in Figur 1 gezeigt, derart ausgebildet, dass wenn das Abdeckelement 24 bzw. die Abdeckelemente 24 sich in dem geschlossenen Zustand, der vorliegend der ersten Stellung S1 entspricht, befinden, die (in Figur 1 gezeigte) fahrzeugabgewandte Oberfläche 38 der Felge 12 beim Blick in axialer Richtung A öffnungsfrei, vorzugsweise und vorsprungsfrei ist. Wenn die Abdeckelemente 24 geschlossen sind, bildet die Felge 12 eine im Wesentlichen glatte und geschlossene Fläche.

Das Abdeckelement 24 bzw. die Abdeckelemente 24 verlaufen bündig mit den Tragabschnitten 20, die den jeweiligen Zwischenraum 22 begrenzen, dem das jeweilige Abdeckelement 24 zugeordnet ist, wenn das Abdeckelement 24 bzw. die Abdeckelemente 24 sich in dem geschlossenen Zustand befinden.

Die Betätigungseinrichtung 26 ist vorliegend derart ausgebildet, dass das Abdeckelement 24 durch pneumatische Betätigung von der zweiten Position S2 in die erste Position S1 überführbar ist. Hierzu werden die Druckzylinder 28 mit Druckmittel beaufschlagt, sodass sie sich verlängern und den Betätigungsabschnitt 34 in radialer Richtung bewegen.

Die Betätigungseinrichtung 26 kann auch elektrisch oder rein mechanisch betätigbar sein. Bei einer elektrisch betätigbaren Betätigungseinrichtung 26 kann beispielsweise ein Generator an der Felge 12 angeordnet sein, der die Rotation zwischen der Radträgerseite und der Radnabenseite zur elektrischen Energiegewinnung nutzen kann. Bei einer rein mechanischen Betätigung kann die eben genannte Rotation beispielsweise auf ein Funksignal hin zum Schalten eines Getriebes verwendet werden.

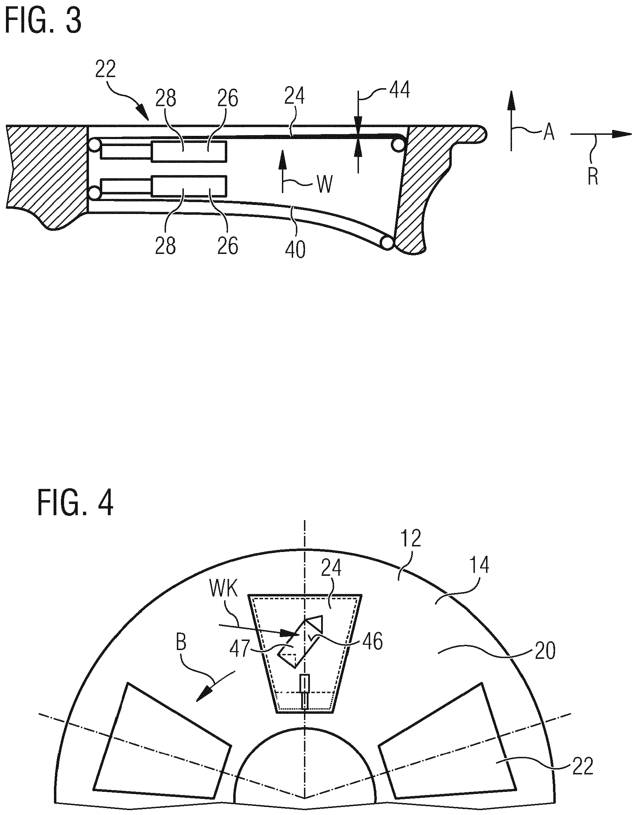

Die Felge 12 aus Figur 3, die im Schnitt entlang der radialen Richtung R gezeigt ist, umfasst ein dem Zwischenraum 22 zugeordnetes Innenabdeckelement 40. Das Innenabdeckelement 40 ist durch Betätigung über die Betätigungseinrichtung 26, ähnlich dem Abdeckelement 24, von einer ersten in eine zweite Stellung überführbar ist. Die Betätigungseinrichtung 26 kann, wie dargestellt, getrennt von der Betätigungseinrichtung 26 für das Abdeckelement 24 ausgebildet sein oder mit dieser verbunden ausgebildet sein. Mit anderen Worten, es kann eine Betätigungseinrichtung 26 vorhanden sein, die das Abdeckelement 24 und das Innenabdeckelement 40 betätigt. Dabei unterscheidet sich eine Abdeckung des Zwischenraums 22 durch das Innenabdeckelement 40 in der ersten Stellung von einer Abdeckung des Zwischenraums 22 durch das Innenabdeckelement 40 in der zweiten Stellung. Das Innenabdeckelement 40 ist an der fahrzeugzugewandten Seite des Felgenkörpers 14 angeordnet. Das Innenabdeckelement 40 verformt sich, vorzugsweise elastisch reversibel, beim Übergang zwischen der ersten Stellung und der zweiten Stellung.

Das Innenabdeckelement 40 und das Abdeckelement 24 wölben sich beim Übergang in den maximal geöffneten Zustand in die gleiche Richtung, vorliegend nach axial außen, was durch den Pfeil W gekennzeichnet ist. Denkbar ist aber auch, dass sich das Innenabdeckelement 40 und das Abdeckelement 24 in unterschiedliche Richtungen wölben. Vorzugsweise wölbt sich dann das Abdeckelement 24 nach axial außen und das Innenabdeckelement 40 nach axial innen.

Das Innenabdeckelement 40 verläuft bündig mit den Tragabschnitten 20, die den jeweiligen Zwischenraum 22 begrenzen, dem das Innenabdeckelement 40 zugeordnet ist, wenn das Innenabdeckelement 40 sich in dem geschlossenen Zustand befindet.

Es ist möglich, die Felge derart zu gestalten, dass das Abdeckelement 24 und/oder das Innenabdeckelement 40 derart ausgebildet ist, dass es sich beim Anlegen einer Spannung verformt, insbesondere wölbt, vorzugsweise wobei das Abdeckelement 24 und/oder das Innenabdeckelement 40 aus einem Material gebildet ist oder ein solches Material umfasst, dass sich beim Anlegen einer Spannung verformt, vorzugsweise wölbt.

Es ist möglich, dass das Abdeckelement 24 sich abhängig von seiner Temperatur verformt, und insbesondere bei Erwärmung von der ersten Stellung S1 in die zweite Stellung S2 übergeht.

Es kann ein Elektromagnet, der ein elektromagnetisches Feld um das Abdeckelement verändern kann, vorzugsweise an einem Tragabschnitt 20, an dem Felgenkörper 14 angeordnet sein, wobei das Abdeckelement 24 derart ausgebildet sein kann, dass es durch die Änderung des Magnetfelds des Elektromagneten verformbar ist, und insbesondere bei Änderung des Magnetfelds des Elektromagneten von der ersten Stellung S1 in die zweite Stellung S2 übergeht.

Das Abdeckelement 24 aus Figur 3 weist eine sich über seine Fläche, die sich in Umfangsrichtung U und radialer Richtung R erstreckt, verändernde Materialstärke 44 in axialer Richtung A auf.

Das Abdeckelement 24 kann derart ausgebildet und angeordnet sein, dass es eine Luftangriffsfläche 46 aufweist, die derart ausgebildet und angeordnet ist, dass der Luftwiderstand bei sich um die axiale Richtung A drehender Felge 12 das Abdeckelement 24 von der ersten Stellung S1 in die zweite Stellung S2 oder von der zweiten Stellung S2 in die erste Stellung S1 drängt. Dies ist in Figur 4 gezeigt.

Das Abdeckelement 24 aus Figur 4 weist eine rampenartige Erhebung 47 auf, die die Luftangriffsfläche 46 umfasst. Die rampenartigen Erhebungen 47 ist derart angeordnet und ausgebildet, dass der Fahrtwind bei sich entlang der durch den Pfeil B gekennzeichneten Richtung drehender Felge 12 eine Kraft WK, die mit einem entsprechenden Pfeil gekennzeichnet ist, auf das Abdeckelement 24 ausübt und dieses in den geschlossenen Zustand drängt.

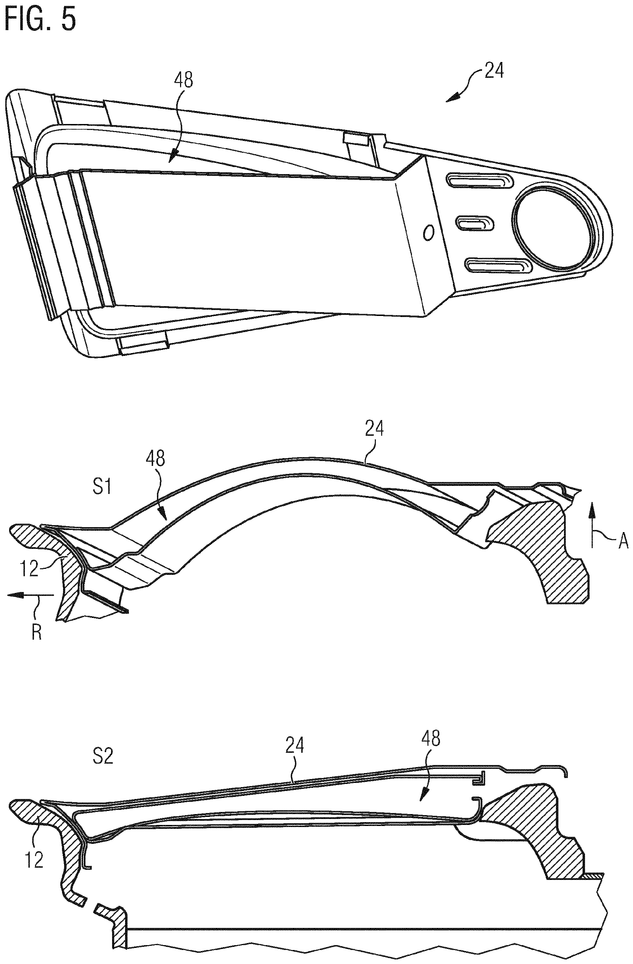

Die Felge 12 kann auch derart ausgebildet sein, dass sie mindestens ein Abdeckelement 24 umfasst, das einen Druckaufnahmebereich 48 umfasst, der mit einem Druckmedium beaufschlagbar ist. Dies ist in Figur 5 gezeigt.

Das Abdeckelement 24 befindet sich in der ersten Stellung Sl, wenn der Druckaufnahmebereich nicht mit dem Druckmedium beaufschlagt ist, und verformt sich in die zweite Stellung S2, wenn der Druckaufnahmebereich 48 mit dem Druckmedium beaufschlagt ist. Bei der Ausführungsform von Figur 5 ist die erste Stellung Sl die maximal geöffnete Stellung und die zweite Stellung S2 die geschlossene Stellung. Dies kann jedoch auch anders herum sein. Die erste Stellung Sl und die zweite Stellung S2 können sich auch von der geschlossenen Stellung und der maximal geöffneten Stellung unterscheiden.

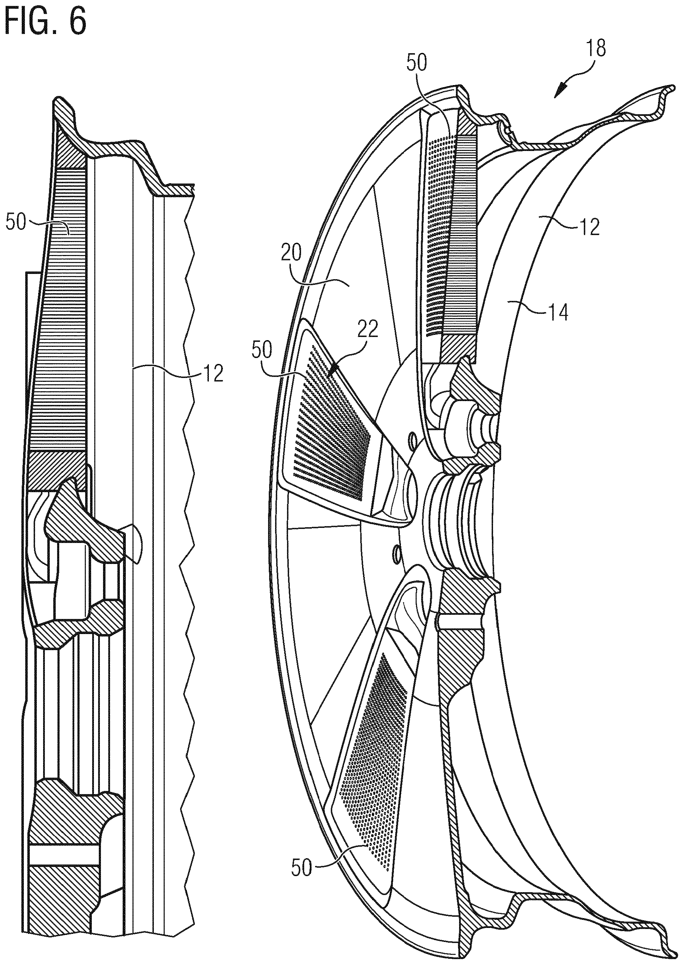

Wie in Figur 6 gezeigt, kann bei der Felge 12 zusätzlich zu dem Abdeckelement 24 in dem Zwischenraum 22 ein Filterelement 50 angeordnet sein, dass ausgebildet ist, um Bremsstaubpartikel aus der Luft zu filtern, die durch den Zwischenraum 22 strömt. In Figur 6 ist das Abdeckelement 24 nicht gezeigt, damit das Filterelement 50 sichtbar ist.

Die Betätigungseinrichtung 26 kann ein Getriebe 52 mit einem felgenkörperseitigen Getriebeelement 54 und mit einem, abdeckelementseitigen Getriebeelement 56 umfasst, wobei das abdeckelementseitige Getriebeelement 56 mit dem Betätigungsabschnitt 34 des Abdeckelements 24 gekoppelt ist, und wobei das Getriebe 52 derart ausgebildet ist, dass es eine Bewegung des felgenkörperseitigen Getriebeelements 54 in eine Bewegung des abdeckelementseitigen Getriebeelements 56 umwandelt.

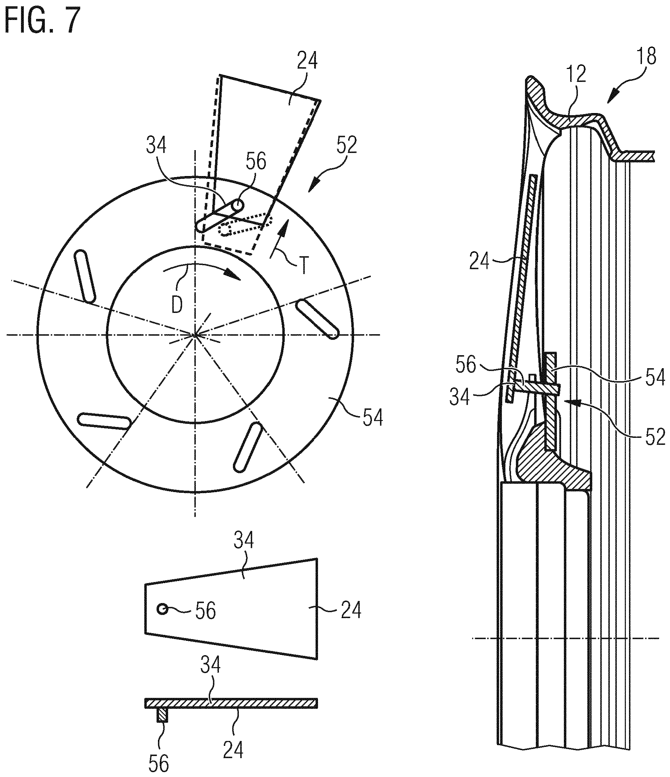

Beim Ausführungsbeispiel von Figur 7 wird eine Drehbewegung D, dargestellt durch einen gekrümmten Pfeil, des felgenkörperseitigen Getriebeelements 54 in eine translatorische Bewegung T, dargestellt durch einen geraden Pfeil, des abdeckelementseitigen Getriebeelements 56 umgewandelt. Vorliegend weist hierzu das felgenkörperseitige Getriebeelement 54 zur Umfangrichtung abgewinkelte Schlitze auf, in die abdeckelementseitige Getriebeelemente 56 eingreifen.

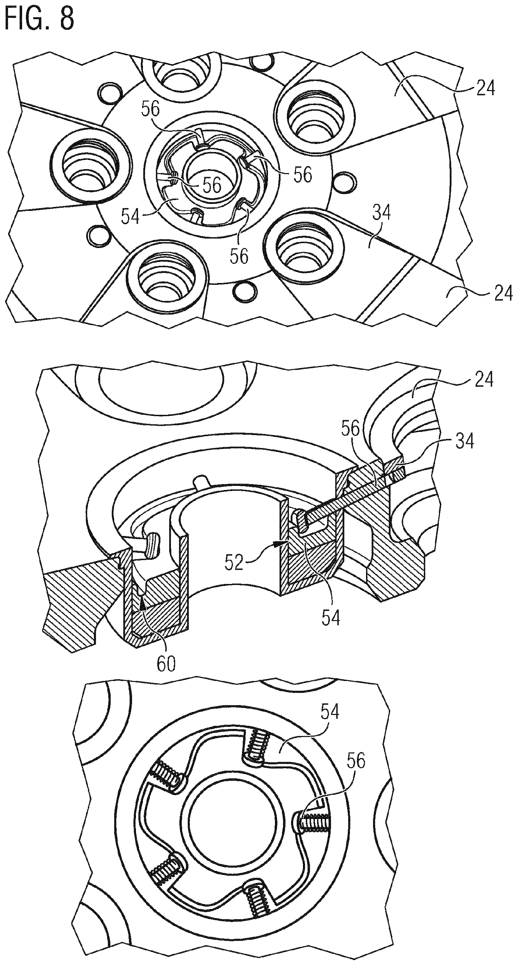

Beim Ausführungsbeispiel von Figur 8 ist das felgenkörperseitige Getriebeelement 54 eine Kurvenbahn bzw. umfasst es eine Nutkurve. Eine Nut 60 der Nutkurve verläuft entlang einer Bahn, die von einer Kreisbahn abweicht. In die Nut 60 des felgenkörperseitigen Getriebeelements 54 greifen mehrere abdeckelementseitige Getriebeelemente 56 ein. Bei einer Drehung des felgenkörperseitigen Getriebeelements 54 bewegen sich die abdeckelementseitigen Getriebeelemente 56 jeweils translatorisch entlang der translatorischen Bewegungsrichtung T, vorliegend also überwiegend nach radial außen. Die abdeckelementseitigen Getriebeelemente 56 sind dabei mit den Betätigungsabschnitten 34 der Abdeckelemente 24 verbunden.

Beim Ausführungsbeispiel von Figur 8 ist das felgenkörperseitige Getriebeelement 54 ein Konusschieber 62. Eine Druckfläche 64 des Konusschiebers 62 verläuft abgeschrägt gegenüber einer translatorischen Bewegungsrichtung T der abdeckelementseitigen Getriebeelemente 56. Die abdeckelementseitigen Getriebeelemente 56 sind entlang der translatorischen Bewegungsrichtung T zwangsgeführt.

Bei einer translatorischen Bewegung entlang der axialen Richtung A des felgenkörperseitigen Getriebeelements 54 bewegen sich die abdeckelementseitigen Getriebeelemente 56 jeweils translatorisch entlang der translatorischen Bewegungsrichtung T, vorliegend also überwiegend nach radial außen. Die abdeckelementseitigen Getriebeelemente 56 sind dabei mit den Betätigungsabschnitten 34 der Abdeckelemente 24 verbunden. Der Konusschieber 62 kann über Beaufschlagung einer Druckkammer 68 mit Druckmittel translatorisch bewegt werden.

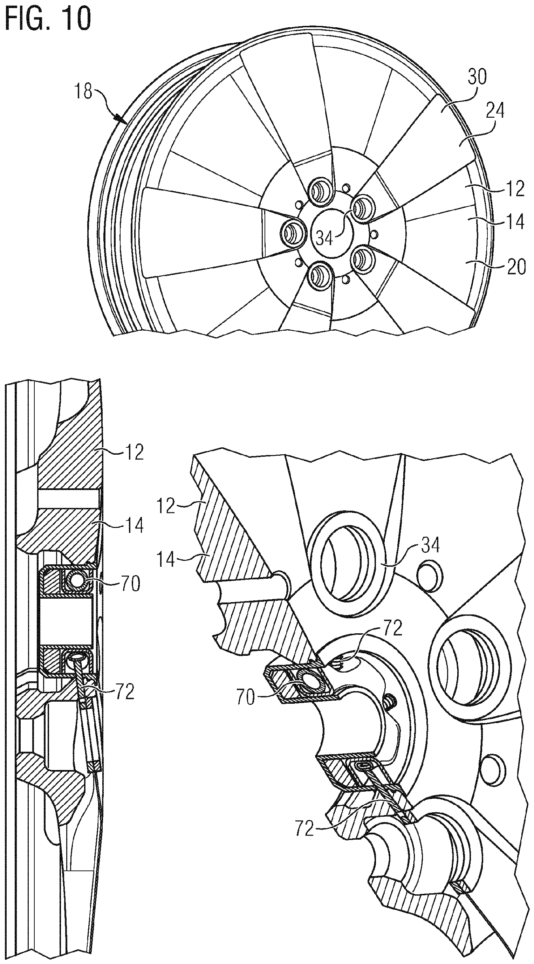

Die Betätigungseinrichtung 26 kann ein Expansionselement 70 umfassen, das mit dem Betätigungsabschnitt 34 des Abdeckelements 24 derart gekoppelt ist, dass eine Volumenänderung des Expansionselements 70 eine Bewegung des Betätigungsabschnitts 34 des Abdeckelements 24 bewirkt. Das Expansionselement 70 kann, wie vorliegend, als kreisringförmiger Hohlkörper ausgebildet sein. Eine derartige Variante ist in Figur 10 gezeigt. Die Abdeckelemente 24 sind über translatorisch bewegbare Schieber 72 mit einem vorliegend schlauchförmig ausgebildeten Expansionselement 70 verbunden. In der in Figur 10 gezeigten Konfiguration ist das Expansionselement 70 nicht mit Druckmittel beaufschlagt, sodass die federvorgespannten Schieber 72 das Expansionselement 70 komprimieren. Wird das Expansionselement 70 mit Druckmittel beaufschlagt, so expandiert es und bewegt die Schieber 72 gegen ihre Federvorspannung. Die Schieber 72 wiederum bewegen die Betätigungsabschnitte 34 der Abdeckelemente 24. Ein Expansionselement 70 kann ein einstückig ausgebildeter Volumenveränderbarer Körper sein. Insbesondere kann ein Expansionselement 70 ohne translatorisch zueinander verschiebliche starre Elemente ausgebildet sein. Ein Expansionselement 70 kann insbesondere elastische Wände aufweisen.

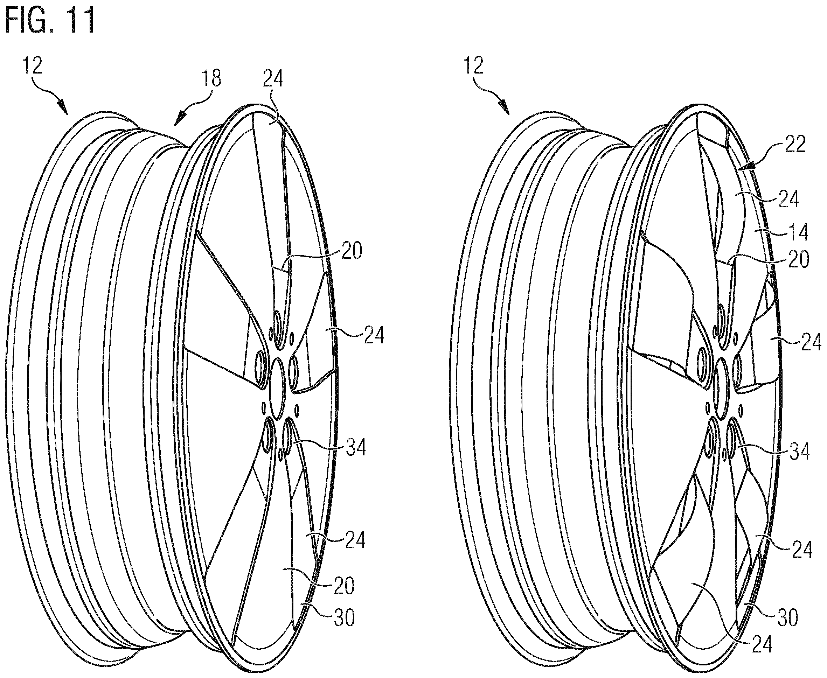

Figur 11 zeigt eine erfindungsgemäße Felge 12, wobei die linke Darstellung von Figur 11 die Abdeckelemente 24 in ihrem geschlossenen Zustand zeigt und die rechte Darstellung von Figur 11 die Abdeckelemente 24 in ihrem maximal geöffneten Zustand zeigt. In ihrem geschlossenen Zustand kontaktieren die Abdeckelemente 24 mit allen ihren Kanten den Felgenkörper 14. In dem geöffneten Zustand hebt sich ein mittlerer Bereich der Abdeckelemente 24 von dem Felgenkörper 14 ab. Ein radial innerer und einen radial äußerer Bereich liegen am Felgenkörper 14 an.

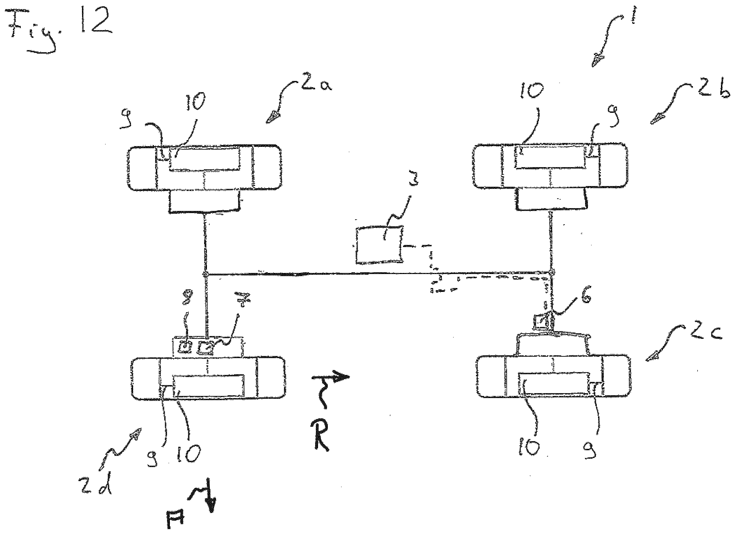

Figur 12 zeigt ein schematisch dargestelltes erfindungsgemäßes Fahrzeug 1. Das Fahrzeug weist vorliegend vier Fahrzeugräder 2, die mit 2a-2d gekennzeichnet sind, auf, wobei die vorliegende Erfindung nicht auf vierrädrige Fahrzeuge 1 beschränkt ist. Die Fahrzeugräder 2 werden nachfolgend noch näher im Detail beschrieben. Jedem der Fahrzeugräder 2 ist im vorliegenden Beispiel eine in Figur 1 schematisch dargestellte Verdichteranordnung 10 zugeordnet. Dies ist jedoch nicht zwingend. Die Verdichteranordnung 10 kann dazu genutzt werden Druckmittel für die Betätigungseinrichtung 26, für das Expansionselement 70 oder für den Druckaufnahmebereich 48 bereitzustellen.

Bei einem ersten Fahrzeugrad 2a ist die Verdichteranordnung 10 als mechanisch angetriebene Verdichteranordnung 10 mit radial beweglichem Verdichterbauteil ausgeführt.

Bei einem weiteren Fahrzeugrad 2b ist die Verdichteranordnung 10 als mechanisch angetriebene Verdichteranordnung 10 mit axial beweglichem Verdichterbauteil ausgeführt.

Bei einem weiteren Fahrzeugrad 2c ist die Verdichteranordnung 10 als elektrisch angetriebene Verdichteranordnung 10 ausgeführt. Die elektrische Energie zum Betrieb der Verdichteranordnung 10 wird von der Hauptbatterie 3 des Fahrzeugs über eine symbolisch dargestellte, vorzugsweise kontaktlose, vorzugsweise induktive, Übertragungseinrichtung 6 von der Radträgerseite zur Nabenseite übertragen. Die Übertragungseinrichtung 6 kann auch durch Schleifkontakte gebildet sein.

Bei einem weiteren Fahrzeugrad 2d wird elektrische Energie zum Betrieb der Verdichteranordnung 10 direkt nabenseitig über eine Energiequelle bereitgestellt. Die Energiequelle kann ein Energiespeicher 7, beispielsweise ein Akkumulator, oder ein Energieerzeuger 8, vorzugsweise ein Generator, sein. Der Energieerzeuger 8 nutzt zur Stromerzeugung die rotatorische Relativbewegung zwischen Radträgerseite und Nabenseite aus.

Ein derartiger Energieerzeuger 8 oder ein Energiespeicher 7, der nabenseitig angebracht ist, kann auch direkt zur elektrischen Betätigung der Betätigungseinrichtung 26 genutzt werden.

Vorteilhaft ist auch die Kombination eines Energiespeichers 7 mit einem Energieerzeuger 8. Damit kann eine elektrische Verdichteranordnung 10 und/oder eine elektrisch betreibbare Betätigungseinrichtung 26 betrieben werden.

Ein Druckmittelkanal trägt in Figur 12 das Bezugszeichen 9.

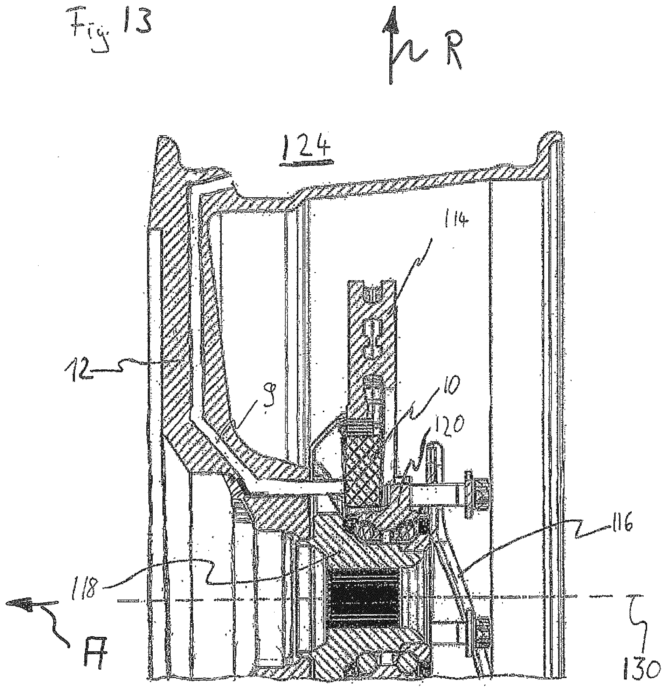

In Figur 13 ist die Einbaulage einer mechanisch angetriebenen Verdichteranordnung 10, wie in den oben erwähnten Rädern 2a und 2b angeordnet, schematisch dargestellt. Die Verdichteranordnung 10 selbst ist in Figur 13 nur schematisch durch eine kreuzschraffierte Fläche dargestellt.

Eine Bremsscheibe 114, ein Radträger 116, eine Radnabe 118 und ein Radlager 120 sind mit Bezugszeichen dargestellt.

Von der Verdichteranordnung 10 erstreckt sich ein Druckmittelkanal 9 bis zu einer Reifenkavität 124. Der Reifen selbst ist in Figur 13 nicht dargestellt.

Eine Drehachse 130 verläuft in axialer Richtung A. Um die Drehachse 130 dreht sich beim Betrieb des Fahrzeugs die Nabenseite und damit die nabenseitigen Komponenten gegenüber der Radträgerseite, also gegenüber den radträgerseitigen Komponenten, wie beispielsweise gegenüber dem Radträger oder auch gegenüber der Fahrgastzelle des Fahrzeugs.

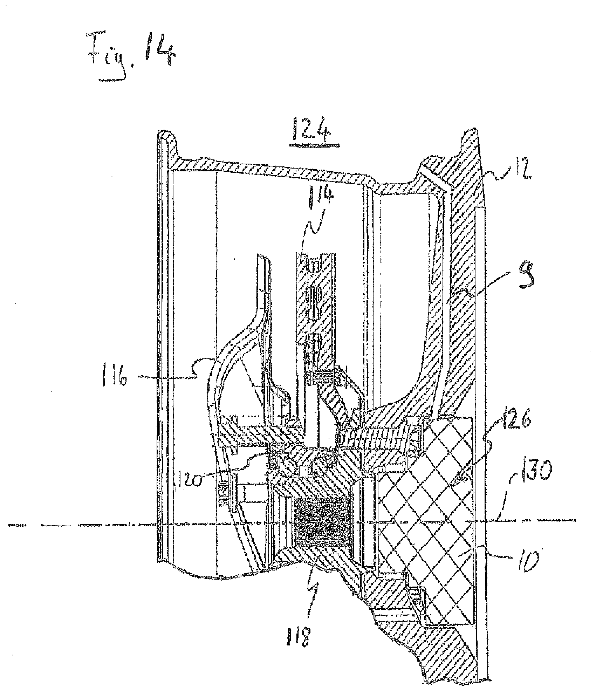

In Figur 14 ist die Einbaulage einer elektrisch angetriebenen Verdichteranordnung 10, wie in den oben erwähnten Rädern 2c und 2d angeordnet, in einer Darstellung ähnlich der Darstellung von Figur 2 gezeigt. Die elektrisch angetriebene Verdichteranordnung 10 ist im Bereich der Radnabenaufnahme 26, vorzugsweise in einer Radnabenaufnahme 126, angeordnet.

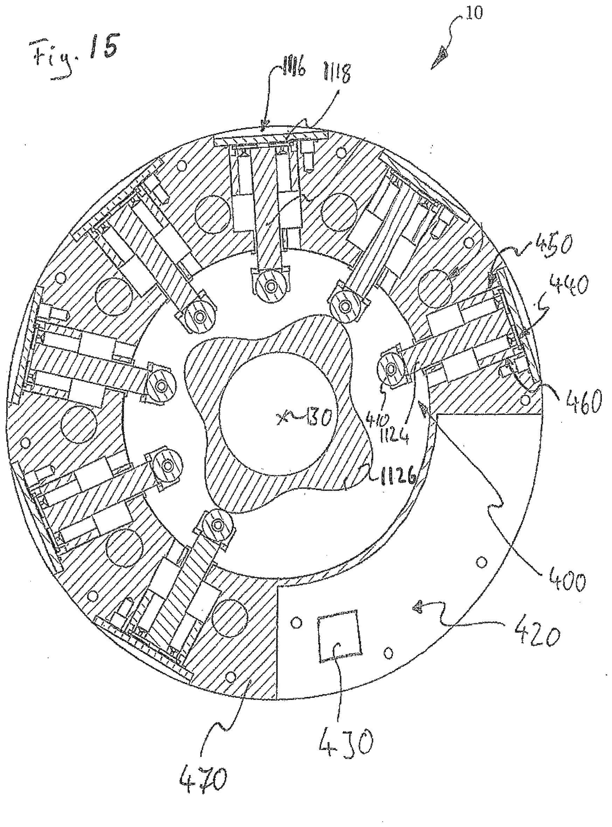

Figur 15 zeigt eine Ausführungsform einer mechanischen Verdichteranordnung 10. Verdichterbauteile 1118 sind zur Ausführung einer oszillierenden translatorischen Bewegung in radialer Richtung ausgebildet.

Die nabenseitige Getriebeteile 1124 sind dabei als Rollenstößel 400 ausgebildet. An ihrem einem radträgerseitigen Getriebeteil 1126 zugewandten Ende weisen sie jeweils eine selbstschmierende Rolle 410 auf.

An den Verdichterbauteilen 1118 sind jeweils Flatterventile 440 angeordnet. An den Verdichterbauteilen 1118 sind auch Doppeldichtungen 450 angeordnet ist, die je ein Schmiermittelreservoir 460 des Verdichterbauteils 1118 begrenzen und gleichzeitig einen nabenseitigen Kompressionsraum 1116 gegen das Verdichterbauteil 1118 dichten.

Ein nabenseitiger Teil 470 der Verdichteranordnung 10 ist weitestgehend ringförmig ausgebildet und umfasst vorliegend sämtliche in Figur 15 gezeigten Teile der Verdichteranordnung 10 außer dem radträgerseitigen Getriebeteil 1126.

## Patentansprüche

1. Felge (12) für ein Fahrzeugrad mit einem Felgenkörper, der einen Nabenabschnitt (16), ein Felgenbett (18) zur Aufnahme eines Reifens, mehrere zwischen dem Nabenabschnitt (16) und dem Felgenbett (18) angeordnete Tragabschnitte (20), und wenigstens einen zwischen den Tragabschnitten (20) angeordneten Zwischenraum (22) aufweist, wobei die Felge (12) wenigstens ein dem Zwischenraum (22) zugeordnetes Abdeckelement (24) aufweist, wobei das Abdeckelement (24), vorzugsweise durch Betätigung über eine Betätigungseinrichtung (26), wenigstens von einer ersten Stellung (S1) in eine zweite Stellung (S2) überführbar ist und wobei sich eine Abdeckung des Zwischenraums (22) durch das Abdeckelement (24) in der ersten Stellung (S1) von einer Abdeckung des Zwischenraums (22) durch das Abdeckelement (24) in der zweiten Stellung (S2) unterscheidet, **dadurch gekennzeichnet, dass** das Abdeckelement (24) sich beim Übergang zwischen der ersten Stellung (S1) und der zweiten Stellung (S2) verformt, und dass die Betätigungseinrichtung derart ausgebildet ist, dass das Abdeckelement (44) durch pneumatische, elektrische oder magnetische Betätigung von der zweiten Position in die erste Position überführbar ist und/oder von der ersten Position in die zweite Position überführbar ist.

2. Felge nach Anspruch 1, **dadurch gekennzeichnet, dass** das Abdeckelement (24) sich elastisch reversibel verformt.

3. Felge nach Anspruch 1 oder 2, **dadurch gekennzeichnet, dass** das Abdeckelement (24) einen, vorzugsweise radial außen liegenden und/oder in Umfangsrichtung (U) verlaufenden, Befestigungsabschnitt (30) umfasst, der unverschieblich mit dem Felgenkörper (14) der Felge (12) verbunden ist.

4. Felge nach einem der Ansprüche 1 bis 3, **dadurch gekennzeichnet,**
**dass** das Abdeckelement (24) einen, vorzugsweise radial innen liegenden und/oder in Umfangsrichtung (U) verlaufenden, Betätigungsabschnitt (34) umfasst, der beweglich, insbesondere verschieblich, vorzugsweise in einer axialen Richtung (A) und/oder in eine radialen Richtung (R) und/oder in einer Umfangsrichtung (U) verschieblich, gegenüber dem Felgenkörper (14) der Felge (12) ist.

5. Felge nach einem der voranstehenden Ansprüche, **dadurch gekennzeichnet, dass** sich das Abdeckelement (24) in der ersten Stellung (S1) oder in der zweiten Stellung (S2) in einem geschlossenen Zustand befindet, in dem der Zwischenraum (22) durch das Abdeckelement (24) geschlossen ist.

6. Felge nach einem der voranstehenden Ansprüche, **dadurch gekennzeichnet, dass** sich das Abdeckelement (24) in der ersten Stellung (S1) oder in der zweiten Stellung (S2) in einem maximal geöffneten Zustand befindet, in dem der Zwischenraum (22) durch das Abdeckelement (24) jedenfalls teilweise freigegeben ist.

7. Felge nach einem der voranstehenden Ansprüche, **dadurch gekennzeichnet, dass** das Abdeckelement (24) im maximal geöffneten Zustand wenigstens bereichsweise nach axial außen, also von der Fahrzeugseite der Felge (12) weg, oder nach axial innen gewölbt ist.

8. Felge nach einem der voranstehenden Ansprüche, **dadurch gekennzeichnet, dass** das Abdeckelement (24) mittels der Betätigungseinrichtung (26) in einen abgewinkelten Zustand überführbar ist, vorzugsweise wobei das Abdeckelement (24) sich beim Übergang in den abgewinkelten Zustand, vorzugsweise elastisch reversibel, verformt, wobei das Abdeckelement (24) in dem abgewinkelten Zustand derart gegenüber dem Felgenkörper (14) angeordnet ist, dass bei einer Drehung der Felge (12) um die axiale Richtung (A) Luft durch das Abdeckelement (24) in den Zwischenraum (22) geleitet wird, insbesondere wobei das Abdeckelement (24) in dem abgewinkelten Zustand mit einer umfangsrichtungsseitigen Kante (33) von dem Felgenkörper (14) abgehoben ist, vorzugsweise und mit einer dieser gegenüberliegenden umfangsrichtungsseitigen Kante (33) an dem Felgenkörper (14) anliegt.

9. Felge nach einem der voranstehenden Ansprüche, **dadurch gekennzeichnet, dass** der Felgenkörper (14) mehrere Zwischenräume (22) aufweist, wobei mehreren, vorzugsweise allen Zwischenräumen (22), je ein Abdeckelement (24) zugeordnet ist, vorzugsweise wobei die Abdeckelemente (24) je die Merkmale des Abdeckelements (24) eines oder mehrerer der voranstehenden und/oder nachfolgenden Ansprüche aufweisen.

10. Felge nach einem der voranstehenden Ansprüche, **dadurch gekennzeichnet, dass**, wenn das Abdeckelement (24) bzw. die Abdeckelemente (24) sich in dem geschlossenen Zustand befinden, die fahrzeugabgewandte Oberfläche der Felge beim Blick in axialer Richtung öffnungsfrei, vorzugsweise und vorsprungsfrei, ist, vorzugsweise mit allen umfangsrichtungsseitigen Kanten (33), vorzugsweise allen Kanten, an dem Felgenkörper (14) anliegt.

11. Felge nach einem der voranstehenden Ansprüche, **dadurch gekennzeichnet, dass**, wenn das Abdeckelement (24) bzw. die Abdeckelemente (24) sich in dem geschlossenen Zustand befinden, das Abdeckelement (24) bzw. die Abdeckelemente (24) bündig mit den Tragabschnitten (20) verlaufen, die den jeweiligen Zwischenraum begrenzen, dem das jeweilige Abdeckelement zugeordnet ist.

12. Felge nach einem der voranstehenden Ansprüche, **dadurch gekennzeichnet, dass** die Felge ein dem Zwischenraum (22) zugeordnetes Innenabdeckelement (40) aufweist, wobei das Innenabdeckelement (40) durch Betätigung über die Betätigungseinrichtung (26) wenigstens von einer ersten in eine zweite Stellung überführbar ist und wobei sich eine Abdeckung des Zwischenraums (22) durch das Innenabdeckelement (40) in der ersten Stellung von einer Abdeckung des Zwischenraums (42) durch das Innenabdeckelement (40) in der zweiten Stellung unterscheidet, wobei das Innenabdeckelement (40) an der fahrzeugzugewandten Seite des Felgenkörpers (14) angeordnet ist, vorzugsweise wobei das Innenabdeckelement (40) sich beim Übergang zwischen der ersten Stellung (S1) und der zweiten Stellung (S2), vorzugsweise elastisch reversibel, verformt.

13. Felge nach dem voranstehenden Anspruch, **dadurch gekennzeichnet, dass** das Innenabdeckelement (40) und das Abdeckelement (24) sich beim Übergang in den maximal geöffneten Zustand in die gleiche Richtung, vorzugsweise nach axial außen, oder in unterschiedliche Richtungen, vorzugsweise das Abdeckelement (24) nach axial außen und das Innenabdeckelement (40) nach axial innen, wölben.

14. Felge nach einem der beiden voranstehenden Ansprüche, **dadurch gekennzeichnet, dass**, wenn das Innenabdeckelement (40) sich in dem geschlossenen Zustand befindet, das Innenabdeckelement (40) bündig mit den Tragabschnitten (20) verläuft, die den jeweiligen Zwischenraum. (22), dem das Innenabdeckelement (40) zugeordnet ist, begrenzen.

15. Felge nach einem der Ansprüche 12 bis 14, **dadurch gekennzeichnet, dass** das Abdeckelement (24) und/oder das Innenabdeckelement (40) derart ausgebildet ist, dass es sich beim Anlegen einer Spannung verformt, insbesondere wölbt, vorzugsweise wobei das Abdeckelement (24) und/oder das Innenabdeckelement (40) aus einem Material gebildet ist oder ein solches Material umfasst, dass sich beim Anlegen einer Spannung verformt, vorzugsweise wölbt.

16. Felge nach einem der voranstehenden Ansprüche, **dadurch gekennzeichnet, dass** das Abdeckelement (24) derart ausgebildet ist, dass es, wenn es nicht durch die Betätigungseinrichtung (26) in eine von der ersten Stellung (S1) und/oder von der zweiten Stellung (S2) abweichende Stellung überführt und gehalten ist, in die erste Stellung (S1) oder die zweite Stellung (S2) zurückkehrt.

17. Felge nach einem der voranstehenden Ansprüche, **dadurch gekennzeichnet, dass** das Abdeckelement (24) sich abhängig von seiner Temperatur verformt, und insbesondere bei Erwärmung von der ersten Stellung (S1) in die zweite Stellung (S2) übergeht, vorzugsweise wobei das Abdeckelement (24) ein Formgedächtnismaterial umfasst.

18. Felge nach einem der voranstehenden Ansprüche, **dadurch gekennzeichnet, dass** ein Elektromagnet, der ein elektromagnetisches Feld um das Abdeckelement verändern kann, an dem Felgenkörper (14) angeordnet ist, vorzugsweise an einem Tragabschnitt (20), wobei das Abdeckelement (24) derart ausgebildet ist, dass es durch die Änderung des Magnetfelds des Elektromagneten verformbar ist, und insbesondere bei Änderung des Magnetfelds des Elektromagneten von der ersten Stellung (S1) in die zweite Stellung (S2) übergeht.

19. Felge nach einem der voranstehenden Ansprüche, **dadurch gekennzeichnet, dass** das Abdeckelement (24) eine sich über seine Fläche, die sich in Umfangsrichtung (U) und radialer Richtung (R) erstreckt, verändernde Materialstärke (44) in axialer Richtung (A) aufweist.

20. Felge nach einem der voranstehenden Ansprüche, **dadurch gekennzeichnet, dass** das Abdeckelement (24) derart ausgebildet und angeordnet ist, dass es eine Luftangriffsfläche (46) aufweist, die derart ausgebildet und angeordnet ist, dass der Luftwiderstand bei sich um die axiale Richtung (A) drehender Felge (12) das Abdeckelement (24) von der ersten Stellung (S1) in die zweite Stellung (S2) oder von der zweiten Stellung (S2) in die erste Stellung (S1) drängt.

21. Felge nach einem der voranstehenden Ansprüche, **dadurch gekennzeichnet, dass** sie mindestens ein Abdeckelement (24) umfasst, das einen Druckaufnahmebereich (48) umfasst, der mit einem Druckmedium beaufschlagbar ist, wobei das Abdeckelement (24) sich in der ersten Stellung (S1) befindet, wenn der Druckaufnahmebereich (48) nicht mit dem Druckmedium beaufschlagt ist, und sich in die zweite Stellung (S2) verformt, wenn der Druckaufnahmebereich (48) mit dem Druckmedium beaufschlagt ist.

22. Felge nach einem der voranstehenden Ansprüche, **dadurch gekennzeichnet, dass** in dem Zwischenraum (22) ein Filterelement (50) angeordnet ist, dass ausgebildet ist, um Bremsstaubpartikel aus der Luft zu filtern, die durch den Zwischenraum (22) strömt.

23. Felge nach einem der voranstehenden Ansprüche, **dadurch gekennzeichnet, dass** die Betätigungseinrichtung (26) ein Getriebe (52) mit einem felgenkörperseitigen Getriebeelement (54) und mit einem abdeckelementseitigen Getriebeelement (56) umfasst, wobei das abdeckelementseitige Getriebeelement (56) mit dem Betätigungsabschnitt (34) des Abdeckelement (24) gekoppelt ist, und wobei das Getriebe (52) derart ausgebildet ist, dass es eine Bewegung des felgenkörperseitigen Getriebeelements (54) in eine Bewegung des abdeckelementseitigen Getriebeelements (56) umwandelt.

24. Felge nach dem voranstehenden Anspruch, **dadurch gekennzeichnet, dass** die Felge (12) wenigstens zwei Abdeckelemente (24) umfasst, die je mit ihrem Betätigungsabschnitt (34) mit einem jeweiligen abdeckelementseitigen Getriebeelement (56) verbunden sind, wobei das Getriebe (52) derart ausgebildet ist, dass es eine Bewegung des felgenkörperseitigen Getriebeelements (54) in eine Bewegung der abdeckelementseitigen Getriebeelemente (56) umwandelt.

25. Felge nach einem der voranstehenden Ansprüche, **dadurch gekennzeichnet, dass** die Betätigungseinrichtung (26) ein Expansionselement (70) umfasst, das mit dem Betätigungsabschnitt (34) des Abdeckelements (24) derart gekoppelt ist, dass eine Volumenänderung des Expansionselements (70) eine Bewegung des Betätigungsabschnitts (34) des Abdeckelements (24) bewirkt.

26. Felge nach einem der voranstehenden Ansprüche, **dadurch gekennzeichnet, dass** die Betätigungseinrichtung (46) pneumatisch mittels Druckmittel betätigbar ist, wobei als Druckmittelquelle eine Reifenkavität (24) des die Felge umfassenden Fahrzeugrads (2) dient oder eine Verdichteranordnung (10) zur Bereitstellung von unter Druck stehendem Druckmittel, wobei die Verdichteranordnung (10) vorzugsweise im Bereich der Felge angeordnet ist, vorzugsweise wobei die Verdichteranordnung (10). wenigstens einen nabenseitigen Kompressionsraum (116, 240, 242) umfasst.

27. Fahrzeugrad mit einer Felge nach einem der voranstehenden Ansprüche.

28. Fahrzeug mit wenigstens einem Fahrzeugrad nach dem voranstehenden Anspruch.

## Claims

1. A wheel rim (12) for a vehicle wheel, having a rim body which has a hub portion (16), a rim well (18) for receiving a tire, multiple carrier portions (20) arranged between the hub portion (16) and the rim well (18), and at least one gap (22) arranged between the carrier portions (20), wherein the wheel rim (12) has at least one cover element (24) associated with the gap (22), wherein the cover element (24) can be transferred, preferably by actuation *via* an actuating device (26), at least from a first position (S1) into a second position (S2), and wherein a covering of the gap (22) by the cover element (24) in the first position (S1) is different from a covering of the gap (22) by the cover element (24) in the second position (S2), **characterized in that** the cover element (24) deforms when it is transferred between the first position (S1) and the second position (S2), and the actuating device is so configured that the cover element (44) can be transferred from the second position into the first position and/or can be transferred from the first position into the second position by pneumatic, electrical or magnetic actuation.

2. The wheel rim as claimed in claim 1, **characterized in that** the cover element (24) deforms elastically reversibly.

3. The wheel rim as claimed in claim 1 or 2, **characterized in that** the cover element (24) comprises a fastening portion (30), preferably located radially outwards and/or extending in a peripheral direction (U), which is undisplaceably connected to the rim body (14) of the wheel rim (12).

4. The wheel rim as claimed in any one of claims 1 to 3, **characterized in that** the cover element (24) comprises an actuating portion (34), preferably located radially inwards and/or extending in a peripheral direction (U), which is movable, in particular displaceable, preferably in an axial direction (A) and/or in a radial direction (R) and/or in a peripheral direction (U), relative to the rim body (14) of the wheel rim (12).

5. The wheel rim as claimed in any one of the preceding claims, **characterized in that** the cover element (24) in the first position (S1) or in the second position (S2) is in a closed state, in which the gap (22) is closed by the cover element (24).

6. The wheel rim as claimed in any one of the preceding claims, **characterized in that** the cover element (24) in the first position (S1) or in the second position (S2) is in a maximally open state, in which the gap (22) is at least partially exposed by the cover element (24).

7. The wheel rim as claimed in any one of the preceding claims, **characterized in that** the cover element (24) in the maximally open state is at least in some regions curved axially outwards, that is to say away from the vehicle side of the wheel rim (12), or axially inwards.

8. The wheel rim as claimed in any one of the preceding claims, **characterized in that** the cover element (24) can be transferred by means of the actuating device (26) into an angled state, preferably wherein the cover element (24) deforms, preferably elastically reversibly, when it is transferred into the angled state, wherein the cover element (24) in the angled state is so arranged relative to the rim body (14) that, when the wheel rim (12) rotates about the axial direction (A), air is guided by the cover element (24) into the gap (22), in particular wherein the cover element (24) in the angled state is lifted from the rim body (14) with an edge (33) on the peripheral direction side, preferably and lies against the rim body (14) with an opposite edge (33) on the peripheral direction side.

9. The wheel rim as claimed in any one of the preceding claims, **characterized in that** the rim body (14) has multiple gaps (22), wherein multiple gaps (22), preferably all the gaps, each have an associated cover element (24), preferably wherein the cover elements (24) each have the features of the cover element (24) of one or more of the preceding and/or following claims.

10. The wheel rim as claimed in any one of the preceding claims, **characterized in that**, when the cover element (24) or the cover elements (24) is/are in the closed state, the surface of the wheel rim facing away from the vehicle, when seen in the axial direction, is free of openings, preferably and free of projections, preferably lies with all the edges (33) on the peripheral direction side, preferably all the edges, against the rim body (14).

11. The wheel rim as claimed in any one of the preceding claims, **characterized in that**, when the cover element (24) or the cover elements (24) is/are in the closed state, the cover element (24) or the cover elements (24) extend(s) flush with the carrier portions (20) which delimit the respective gap with which the cover element in question is associated.

12. The wheel rim as claimed in any one of the preceding claims, **characterized in that** the wheel rim has an inner cover element (40) associated with the gap (22), wherein the inner cover element (40) can be transferred at least from a first position into a second position by actuation *via* the actuating device (26) and wherein a covering of the gap (22) by the inner cover element (40) in the first position is different from a covering of the gap (42) by the inner cover element (40) in the second position, wherein the inner cover element (40) is arranged on the side of the rim body (14) that faces the vehicle, preferably wherein the inner cover element (40) deforms, preferably elastically reversibly, when it is transferred between the first position (S1) and the second position (S2).

13. The wheel rim as claimed in the preceding claim, **characterized in that** the inner cover element (40) and the cover element (24), when they are transferred into the maximally open state, curve in the same direction, preferably axially outwards, or in different directions, preferably the cover element (24) curves axially outwards and the inner cover element (40) curves axially inwards.

14. The wheel rim as claimed in any one of the two preceding claims, **characterized in that**, when the inner cover element (40) is in the closed state, the inner cover element (40) extends flush with the carrier portions (20) which delimit the respective gap (22) with which the inner cover element (40) is associated.

15. The wheel rim as claimed in any one of claims 12 to 14, **characterized in that** the cover element (24) and/or the inner cover element (40) is/are configured so as to deform, in particular curve, when a voltage is applied, preferably wherein the cover element (24) and/or the inner cover element (40) is/are formed of a material or comprise(s) a material that deforms, preferably curves, when a voltage is applied.

16. The wheel rim as claimed in any one of the preceding claims, **characterized in that** the cover element (24) is so configured that it returns to the first position (S1) or the second position (S2) when it has not been transferred by the actuating device (26) into a position other than the first position (S1) and/or the second position (S2) and held **in that** position.

17. The wheel rim as claimed in any one of the preceding claims, **characterized in that** the cover element (24) deforms in dependence on its temperature, and in particular is transferred from the first position (S1) into the second position (S2) on heating, preferably wherein the cover element (24) comprises a shape memory material.

18. The wheel rim as claimed in any one of the preceding claims, **characterized in that** an electromagnet, which can change an electromagnetic field around the cover element, is arranged on the rim body (14), preferably on a carrier portion (20), wherein the cover element (24) is so configured that it is deformable by the change in the magnetic field of the electromagnet, and in particular is transferred from the first position (S1) into the second position (S2) when the magnetic field of the electromagnet changes.

19. The wheel rim as claimed in any one of the preceding claims, **characterized in that** the cover element (24) has a material thickness (44) in the axial direction (A) which changes over its surface, which extends in the peripheral direction (U) and in the radial direction (R).

20. The wheel rim as claimed in any one of the preceding claims, **characterized in that** the cover element (24) is so configured and arranged that it has an air attack surface (46) which is so configured and arranged that the air resistance when the wheel rim (12) rotates about the axial direction (A) urges the cover element (24) from the first position (S1) into the second position (S2) or from the second position (S2) into the first position (S1).

21. The wheel rim as claimed in any one of the preceding claims, **characterized in that** it comprises at least one cover element (24) which comprises a pressure-receiving region (48) to which a pressure medium can be applied, wherein the cover element (24) is in the first position (S1) when the pressure medium is not applied to the pressure-receiving region (48) and deforms into the second position (S2) when the pressure medium is applied to the pressure-receiving region (48).

22. The wheel rim as claimed in any one of the preceding claims, **characterized in that** a filter element (50) is arranged in the gap (22), which filter element is configured to filter brake dust particles from the air which flows through the gap (22).

23. The wheel rim as claimed in any one of the preceding claims, **characterized in that** the actuating device (26) comprises a transmission (52) having a transmission element (54) on the rim body side and having a transmission element (56) on the cover element side, wherein the transmission element (56) on the cover element side is coupled with the actuating portion (34) of the cover element (24), and wherein the transmission (52) is so configured that it converts a movement of the transmission element (54) on the rim body side into a movement of the transmission element (56) on the cover element side.

24. The wheel rim as claimed in the preceding claim, **characterized in that** the wheel rim (12) comprises at least two cover elements (24) which are each connected by their actuating portion (34) to a respective transmission element (56) on the cover element side, wherein the transmission (52) is so configured that it converts a movement of the transmission element (54) on the rim body side into a movement of the transmission element (56) on the cover element side.

25. The wheel rim as claimed in any one of the preceding claims, **characterized in that** the actuating device (26) comprises an expansion element (70) which is coupled with the actuating portion (34) of the cover element (24) in such a manner that a change in volume of the expansion element (70) causes a movement of the actuating portion (34) of the cover element (24).

26. The wheel rim as claimed in any one of the preceding claims, **characterized in that** the actuating device (26) is pneumatically actuatable by means of pressure medium, wherein there serves as the pressure medium source a tire cavity (24) of the vehicle wheel (2) comprising the wheel rim or a compressor arrangement (10) for providing pressure medium under pressure, wherein the compressor arrangement (10) is preferably arranged in the region of the wheel rim, preferably wherein the compressor arrangement (10) comprises at least one compression chamber (116, 240, 242) on the hub side.

27. A vehicle wheel having a wheel rim as claimed in any one of the preceding claims.

28. A vehicle having at least one vehicle wheel as claimed in the preceding claim.

## Revendications

1. Jante (12) pour un véhicule automobile comprenant un corps de jante, qui comporte une partie moyeu (16), un creux de jante (18) destiné à loger un pneu, plusieurs parties de support (20) disposées entre la partie moyeu (16) et le creux de jante (18), et au moins un espace intermédiaire (22) ménagé entre les parties de support (20), la jante (12) comportant au moins un élément de recouvrement (24) associé à l'espace intermédiaire (22), l'élément de recouvrement (24) peut se déplacer, de préférence par l'actionnement d'un dispositif d'actionnement (26), au moins d'une première position (S1) à une seconde position (S2), et le recouvrement de l'espace intermédiaire (22) par l'élément de recouvrement (24) se différenciant dans la première position (S1) d'un recouvrement de l'espace intermédiaire (22) par l'élément de recouvrement (24) dans la seconde position (S2), **caractérisée en ce que** l'élément de recouvrement (24) se déforme lors du passage de la première position (S1) à la seconde position (S2) et **en ce que** le dispositif d'actionnement est conçu de telle sorte que l'élément de recouvrement (44) puisse se déplacer par actionnement pneumatique, électrique ou magnétique de la seconde position à la première position et/ou de la première position à la seconde position.

2. Jante selon la revendication 1, **caractérisée en ce que** l'élément de recouvrement (24) peut se déformer élastiquement de manière réversible.

3. Jante selon la revendication 1 ou la revendication 2, **caractérisée en ce que** l'élément de recouvrement (24) comprend une partie de fixation (30) s'étendant dans le sens de la périphérie (U) et/ou se trouvant de préférence radialement à l'extérieur, ladite partie de fixation est reliée au corps (14) de la jante (12) de manière non coulissante.

4. Jante selon l'une des revendications 1 à 3, **caractérisée en ce que** l'élément de recouvrement (24) comprend une partie d'actionnement (34) s'étendant dans le sens de la périphérie (U) et/ou se trouvant de préférence radialement à l'intérieur, ladite partie d'actionnement peut se déplacer, en particulier peut coulisser, de préférence dans un sens axial (A) et/ou dans un sens radial (R) et/ou dans le sens de la périphérie (U), par rapport au corps (14) de la jante (12).

5. Jante selon l'une quelconque des revendications précédentes, **caractérisée en ce que** l'élément de recouvrement (24) dans la première position (S1) ou dans la seconde position (S2) se trouve dans un état fermé, dans lequel l'espace intermédiaire (22) est fermé par l'élément de recouvrement (24).

6. Jante selon l'une quelconque des revendications précédentes, **caractérisée en ce que** l'élément de recouvrement (24) dans la première position (S1) ou dans la seconde position (S2) se trouve dans un état d'ouverture maximale, dans lequel l'espace intermédiaire (22) est dans tous les cas libéré partiellement par l'élément de recouvrement (24).

7. Jante selon l'une quelconque des revendications précédentes, **caractérisée en ce que** l'élément de recouvrement (24) dans l'état d'ouverture maximale au moins à certains endroits est bombé vers l'extérieur axialement, c'est-à-dire depuis le côté véhicule de la jante (12) ou vers l'intérieur axialement.

8. Jante selon l'une quelconque des revendications précédentes, **caractérisée en ce que** l'élément de recouvrement (24) peut être déplacé au moyen du dispositif d'actionnement (26) de manière coudée, de préférence peut être déformé élastiquement de manière réversible, l'élément de recouvrement (24) étant disposé dans l'état coudé par rapport au corps de jante (14) de telle manière que lors d'une rotation de la jante (12) dans le sens axial (A) de l'air soit dirigé par l'élément de recouvrement (24) dans l'espace intermédiaire (22), en particulier l'élément de recouvrement (24) dans l'état coudé est soulevé du corps de jante (14) par une arête côté sens périphérique (33), de préférence repose sur le corps de jante (14) par ladite arête côté sens périphérique opposée.

9. Jante selon l'une quelconque des revendications précédentes, **caractérisée en ce que** le corps de jante (14) comporte plusieurs espaces intermédiaires (22), de préférence, tous les espaces intermédiaires (22) sont associés à un élément de recouvrement (24), de préférence les éléments de recouvrement (24) présentent respectivement les caractéristiques de l'élément de recouvrement (24) d'une ou de plusieurs des revendications précédentes et/ou qui suivent.

10. Jante selon l'une quelconque des revendications précédentes, **caractérisée en ce que**, lorsque l'élément de recouvrement (24) ou les éléments de recouvrement (24) se trouve(nt) dans l'état fermé, la surface de la jante opposée au véhicule lorsqu'on l'observe dans le sens axial, est exempte d'ouverture, de préférence, et exempte de saillie, de préférence repose sur le corps de jante (14) avec toutes les arêtes côté sens périphérique (33), de préférence avec toutes les arêtes.

11. Jante selon l'une quelconque des revendications précédentes, **caractérisée en ce que**, lorsque l'élément de recouvrement (24) ou les éléments de recouvrement (24) se trouve(nt) fermé(s), l'élément de recouvrement (24) ou les éléments de recouvrement (24) s'étendent à fleur avec les parties de support (20) qui délimitent l'espace intermédiaire respectif qui est associé à chaque élément de recouvrement.

12. Jante selon l'une quelconque des revendications précédentes, **caractérisée en ce que** la jante comporte un élément de recouvrement intérieur (40) associé à l'espace intermédiaire (22), l'élément de recouvrement intérieur (40) pouvant être déplacé par actionnement du dispositif d'actionnement (26) au moins d'une première position à une seconde position, et un recouvrement de l'espace intermédiaire (22) par l'élément de recouvrement (40) dans la première position se différencie d'un recouvrement de l'espace intermédiaire (42) par l'élément de recouvrement intérieur (40) dans la seconde position, l'élément de recouvrement intérieur (40) étant disposé sur le côté du corps de jante (14) orienté vers le véhicule, de préférence l'élément de recouvrement intérieur (40) se déformant de préférence élastiquement de manière réversible lors du passage de la première position (S1) à la seconde position (S2).

13. Jante selon la revendication précédente, **caractérisée en ce que** l'élément de recouvrement intérieur (40) et l'élément de recouvrement (24) se bombent lors du passage dans l'état d'ouverture maximale dans le même sens, de préférence vers l'extérieur axialement ou dans des directions différentes, de préférence l'élément de recouvrement (24) vers l'extérieur axialement et l'élément de recouvrement intérieur (40) vers l'intérieur axialement.

14. Jante selon l'une des deux revendications précédentes, **caractérisée en ce que**, lorsque l'élément de recouvrement intérieur (40) est fermé, l'élément de recouvrement intérieur (40) s'étend à fleur avec les parties de support (20) qui délimitent l'espace intermédiaire respectif (22) qui est associé à l'élément de recouvrement intérieur (40).

15. Jante selon l'une des revendications 12 à 14, **caractérisée en ce que** l'élément de recouvrement (24) et/ou l'élément de recouvrement intérieur (40) est conçu de telle sorte qu'il se déforme par application d'une force, en particulier il se bombe, de préférence l'élément de recouvrement (24) et/ou l'élément de recouvrement intérieur (40) étant conçu dans un matériau ou il comprend un matériau qui lui permette de se déformer, de préférence de se bomber lors d'une application d'une force.

16. Jante selon l'une quelconque des revendications précédentes, **caractérisée en ce que** l'élément de recouvrement (24) est conçu de sorte qu'il, lorsqu'il n'est pas déplacé par le dispositif d'actionnement (26) dans une position s'écartant de la première position (S1) et/ou de la seconde position (S2) et n'y est pas retenu, retourne dans la première position (S1) ou dans la seconde position (S2).

17. Jante selon l'une quelconque des revendications précédentes, **caractérisée en ce que** l'élément de recouvrement (24) se déforme en fonction de sa température et en particulier lors d'un réchauffement, passe de la première position (S1) à la seconde position (S2), de préférence l'élément de recouvrement (24) comprend un matériau à mémoire de forme.

18. Jante selon l'une quelconque des revendications précédentes, **caractérisée en ce qu'**un électro-aimant, qui peut modifier le champ électrique autour de l'élément de recouvrement, est disposé sur le corps de jante (14), de préférence sur la partie de support (20), l'élément de recouvrement (24) est conçu de telle sorte qu'il puisse se déformer par modification du champ magnétique de l'électro-aimant, et puisse passer de la première position à la seconde position en particulier lors de la modification du champ magnétique de l'électro-aimant.

19. Jante selon l'une quelconque des revendications précédentes, **caractérisée en ce que** l'élément de recouvrement (24) comporte sur sa surface qui s'étend dans le sens périphérique (U) et dans le sens radial (R) différentes épaisseurs de matériau dans le sens axial (A).

20. Jante selon l'une quelconque des revendications précédentes, **caractérisée en ce que** l'élément de recouvrement (24) est conçu et disposé de telle manière à ce qu'il comporte une surface d'attaque d'air (46) qui est conçue et disposée de manière à ce que la résistance de l'air pousse l'élément de recouvrement (24) de la première position (S1) dans la seconde position (S2) ou de la seconde position (S2) dans la première position (S1) lorsque la jante (12) tourne dans le sens axial (A).

21. Jante selon l'une quelconque des revendications précédentes, **caractérisée en ce qu'**elle comporte au moins un élément de recouvrement (24) qui comporte une zone de réception de pression (48) qui peut être soumise à l'action d'un milieu sous pression, l'élément de recouvrement (24) se trouvant dans la première position (S1) lorsque la zone de réception de pression (48) n'est pas soumise à l'effet du milieu sous pression, et se déforme dans la seconde position (S2) lorsque la zone de réception de pression (48) est soumise à l'effet du milieu sous pression.

22. Jante selon l'une quelconque des revendications précédentes, **caractérisée en ce que** dans l'espace intermédiaire (22) se trouve un élément de filtre (50) qui est conçu pour filtrer les particules de poussière de frein dans l'air, qui circulent par l'espace intermédiaire.

23. Jante selon l'une quelconque des revendications précédentes, **caractérisée en ce que** le dispositif d'actionnement (26) comporte une transmission (52) avec un élément de transmission (54) côté corps de jante et avec un élément de transmission (56) côté élément de recouvrement, l'élément de transmission (56) côté élément de recouvrement étant accouplé à la partie d'actionnement (34) de l'élément de recouvrement (24), et la transmission (52) étant conçue de telle sorte qu'elle convertisse un mouvement de l'élément de transmission (54) côté corps de jante en un mouvement de l'élément de transmission (56) côté élément de recouvrement.

24. Jante selon l'une quelconque des revendications précédentes, **caractérisée en ce que** la jante (12) comprend au moins deux éléments de recouvrement (24) qui chacun sont reliés à leur partie d'actionnement (34) au moyen d'un élément de transmission respectif côté élément de recouvrement (56), la transmission (52) étant conçue de telle sorte qu'elle convertisse un mouvement de l'élément de transmission (54) côté corps de jante en un mouvement de l'élément de transmission (56) côté élément de recouvrement.

25. Jante selon l'une quelconque des revendications précédentes, **caractérisée en ce que** le dispositif d'actionnement (26) comprend un élément d'expansion qui est accouplé à la partie d'actionnement (34) de l'élément de recouvrement (24) de manière à ce qu'une modification de volume de l'élément d'expansion (70) produise un mouvement de la partie d'actionnement (34) de l'élément de recouvrement (24).

26. Jante selon l'une quelconque des revendications précédentes, **caractérisée en ce que** le dispositif d'actionnement (46) peut être actionné par un moyen de pression, une cavité de pneu (24) de la roue de véhicule (2) comprenant la jante sert de source de fluide de pression ou un système de compresseur (10) pour fournir le fluide de pression, le système de compresseur (10) étant disposé de préférence dans la zone de la jante, de préférence le système de compresseur (10) comprend au moins une chambre de compression (116, 240, 242) côté moyeu.

27. Roue de véhicule automobile comprenant une jante selon l'une quelconque des revendications précédentes.

28. Véhicule automobile comprenant au moins une roue de véhicule selon la revendication précédente.
